(19) Europäisches Patentamt / European Patent Office / Office européen des brevets

(11) **EP 4 685 703 A1**

(12) **EUROPEAN PATENT APPLICATION**
published in accordance with Art. 153(4) EPC

(43) Date of publication:
**28.01.2026  Bulletin 2026/05**

(21) Application number: **24777910.1**

(22) Date of filing: **22.03.2024**

(51) International Patent Classification (IPC):
*G06N 3/082* (2023.01)   *G06N 3/047* (2023.01)
*G06N 5/04* (2023.01)   *G06V 10/764* (2022.01)
*G06V 10/82* (2022.01)

(52) Cooperative Patent Classification (CPC):
**G06N 3/047; G06N 3/082; G06N 5/04;**
**G06V 10/764; G06V 10/82**

(86) International application number:
**PCT/CN2024/083269**

(87) International publication number:
**WO 2024/199121 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **28.03.2023  CN 202310350886**

(71) Applicant: **HUAWEI TECHNOLOGIES CO., LTD.**
**Shenzhen 518129 (CN)**

(72) Inventors:
• **HU, Yuhao**
  **Shenzhen, Guangdong 518129 (CN)**

• **CHEN, Minqi**
  **Shenzhen, Guangdong 518129 (CN)**
• **WANG, Dong**
  **Shenzhen, Guangdong 518129 (CN)**
• **HUANG, Zeyi**
  **Shenzhen, Guangdong 518129 (CN)**
• **CHENG, Xinxin**
  **Shenzhen, Guangdong 518129 (CN)**

(74) Representative: **Körber, Martin Hans et al**
**Mitscherlich PartmbB**
**Patent- und Rechtsanwälte**
**Karlstraße 7**
**80333 München (DE)**

(54) **STRUCTURED SPARSITY AND IMAGE CLASSIFICATION METHOD FOR NETWORK MODEL, AND RELATED APPARATUS**

(57)    This application pertains to the field of artificial intelligence technologies, and discloses a structured sparsity method for a network model, an image classification method, and a related apparatus. The method includes: performing, based on a target sparsity mode and a target sparsity ratio, initial structured sparsity on each of a plurality of to-be-sparsified network layers included in a deep learning network model, to obtain an initial sparse network model; determining a precision of the initial sparse network model based on a test sample set; and when the precision of the initial sparse network model reaches a target precision, determining the initial sparse network model as a deep learning network model obtained through structured sparsity. Initial structured sparsity is performed on each of the plurality of to-be-sparsified network layers included in the deep learning network model, to reduce a quantity of elements in an input matrix of a target operator at each network layer, resolve a problem that a large amount of time needs to be spent in inference of the target operator at each network layer, and further reduce computing overheads of the deep learning network model.

Perform, based on a target sparsity mode and a target sparsity ratio, initial structured sparsity on each of a plurality of to-be-sparsified network layers included in a deep learning network model, to obtain an initial sparse network model — 501

Determine a precision of the initial sparse network model based on a test sample set — 502

When the precision of the initial sparse network model reaches a target precision, determine the initial sparse network model as a deep learning network model obtained through structured sparsity — 503

FIG. 5

## Description

This application claims priority to Chinese Patent Application No. 202310350886.1, filed on March 28, 2023 and entitled "STRUCTURED SPARSITY METHOD FOR NETWORK MODEL, IMAGE CLASSIFICATION METHOD, AND RELATED APPARATUS", which is incorporated herein by reference in its entirety.

## TECHNICAL FIELD

This application relates to the field of artificial intelligence technologies, and in particular, to a structured sparsity method for a network model, an image classification method, and a related apparatus.

## BACKGROUND

With rapid development of deep learning technologies, a size of a deep learning network model gradually becomes large, and a quantity of parameters gradually increases. Consequently, computing overheads of performing inference by the deep learning network model are quite high. To be specific, a large amount of time needs to be spent in performing inference by using the deep learning network model. Therefore, a structured sparsity method for the deep learning network model is urgently needed, to reduce computing overheads while ensuring an inference precision of the model.

## SUMMARY

This application provides a structured sparsity method for a network model, an image classification method, and a related apparatus, to address high model inference costs in the related technology. The technical solutions are as follows.

According to a first aspect, a structured sparsity method for a network model is provided. The method includes: performing, based on a target sparsity mode and a target sparsity ratio, initial structured sparsity on each of a plurality of to-be-sparsified network layers included in a deep learning network model, to obtain an initial sparse network model; determining a precision of the initial sparse network model based on a test sample set; and when the precision of the initial sparse network model reaches a target precision, determining the initial sparse network model as a deep learning network model obtained through structured sparsity.

Initial structured sparsity is performed on each of the plurality of to-be-sparsified network layers included in the deep learning network model, to reduce a quantity of elements in an input matrix of a target operator at each network layer, and resolve a problem that a large amount of time needs to be spent in inference of the target operator at each network layer. Because inference costs of the deep learning network model are related to inference costs of each network layer, computing overheads of the deep learning network model are further reduced by reducing time consumption of the target operator at each network layer.

A quantity of elements in an input matrix of a target operator at each network layer in the initial sparse network model is less than a quantity of elements in an input matrix of a target operator at a corresponding network layer in the deep learning network model, and a dimension of an output matrix of the initial sparse network model is the same as a dimension of an output matrix of the deep learning network model.

Optionally, the deep learning network model is applicable to any one of the following types of task scenarios: semantic segmentation, image classification, object detection, image generation, language modeling, question answering, machine translation, and sentiment analysis.

Optionally, the plurality of network layers each include a module using a self-attention mechanism, and the target operator is a softmax operator. It should be noted that, during actual application, in addition to the plurality of to-be-sparsified network layers, the deep learning network model may further include another type of network layer. In addition, the plurality of network layers may further include a module using another mechanism.

Because processes of performing initial structured sparsity on all of the plurality of network layers are the same, any one of the plurality of network layers is used as a target network layer. The following uses the target network layer as an example to describe a process of performing initial structured sparsity on the target network layer. For a process of performing initial structured sparsity on another network layer among the plurality of network layers, refer to the process of performing initial structured sparsity on the target network layer.

Optionally, initial structured sparsity is performed on the target network layer according to the following steps (1) and (2).

(1) Add a target sparsity operator to the target network layer based on the target sparsity mode and the target sparsity ratio, where the target sparsity operator is used to prune elements in an input matrix of a target operator at the target network layer.

To be specific, initial structured sparsity is performed on the target network layer by using the target sparsity operator, to reduce a quantity of elements in the input matrix of the target operator at the target network layer. This can resolve a problem that a large amount of time needs to be spent in inference of the target operator at the target network layer, to reduce computing overheads of the deep learning network model.

The target sparsity mode includes an overall sparsity mode and a partitioned sparsity mode. In different cases, manners of adding the target sparsity operator to the target network layer based on the target sparsity mode and the target sparsity ratio are different. Therefore, the following separately describes two cases.

**In a first case,** the target sparsity mode is the overall sparsity mode, the target sparsity ratio is M%, and M is greater than 0 and less than 100. In this case, a first sparsity operator is added to the target network layer based on the target sparsity mode and the target sparsity ratio, where the first sparsity operator is used to prune elements of a target dimension in the input matrix of the target operator at the target network layer, to retain the first 1-M% of elements with largest values in the target dimension.

**In a second case,** the target sparsity mode is the partitioned sparsity mode, the target sparsity ratio is N:R, both N and R are integers greater than or equal to 1, and N is less than R. In this case, a second sparsity operator is added to the target network layer based on the target sparsity mode and the target sparsity ratio, where the second sparsity operator is used to prune elements of a target dimension in the input matrix of the target operator at the target network layer, to retain the first N elements with largest values among every R elements of the target dimension.

(2) Add a matrix processing operator to the target network layer, where the matrix processing operator is used to process a mapping matrix of the target network layer based on a pruning result of the target sparsity operator, to enable a dimension of an output matrix of the target network layer to remain the same before and after initial structured sparsity is performed on the target network layer.

The pruning result of the target sparsity operator includes a position matrix, and the matrix processing operator determines, based on the position matrix and a related algorithm, value elements corresponding to each row of elements in a normalized matrix from the mapping matrix of the target network layer. The position matrix indicates a position, in the feature matrix that exists before the pruning, of each element in the pruned feature matrix. The mapping matrix of the target network layer is obtained by mapping to-be-inferred data by the target network layer based on a related algorithm. The normalized matrix is obtained by processing the pruned feature matrix by using the target operator.

To be specific, initial structured sparsity is performed on the target network layer by using the matrix processing operator, to ensure isomorphism between output matrices of the target network layer that exist before and after the initial structured sparsity, so that a target network layer obtained through initial structured sparsity is still applicable to an original network structure.

The test sample set includes a plurality of groups of sample data, and each of the plurality of groups of sample data includes a test sample and a sample labeling result. The test sample is input to the initial sparse network model, to obtain a sample test result output by the initial sparse network model. The precision of the initial sparse network model is determined based on the sample test result, the sample labeling result, and a related algorithm.

Optionally, the plurality of groups of sample data include data of a text type, data of an image type, data of a video type, data of an audio type, and the like.

Optionally, the deep learning network model is applicable to different types of task scenarios, such as semantic segmentation, image classification, language modeling, and question answering.

Optionally, when a task scenario to which the deep learning network model is applicable is image classification, the test sample set includes a test image and a classification labeling result. When a task scenario to which the deep learning network model is applicable is question answering, the test sample set includes a test question in a text format and an answer labeling result.

Certainly, during actual application, the precision of the initial sparse network model may alternatively not reach the target precision. In this case, a sparsity ratio of each network layer in the initial sparse network model is optimized based on the target precision, the target sparsity ratio, and the test sample set, to obtain a deep learning network model that is obtained through structured sparsity. To be specific, when the precision of the initial sparse network model cannot meet a use requirement of a user, the sparsity ratio of each network layer in the initial sparse network model is optimized to further improve the precision of the initial sparse network model.

Optionally, the sparsity ratio of each network layer in the initial sparse network model is optimized according to the following steps (1) to (5).

(1) Determine sensitivity of each network layer in the initial sparse network model based on the target precision and the test sample set.
A precision of each network layer in the initial sparse network model is determined based on the test sample set. The sensitivity of each network layer is determined based on the target precision and the precision of each network layer.
(2) Determine an optimized sparsity ratio of each network layer based on the sensitivity of each network layer, a quantity of the plurality of network layers, a total quantity of elements of the target dimension, and the target sparsity ratio.

(3) Optimize the sparsity ratio of each network layer in the initial sparse network model based on the optimized sparsity ratio of each network layer, to obtain an optimized network model.

(4) Determine a precision of the optimized network model based on the test sample set.

(5) When the precision of the optimized network model reaches the target precision, determine the optimized network model as the deep learning network model obtained through structured sparsity.

It should be noted that initial structured sparsity is first performed on each of the plurality of network layers based on the target sparsity mode and the target sparsity ratio, to obtain the initial sparse network model. Sparsity ratios of all of the plurality of network layers included in the initial sparse network model are the same, and are the target sparsity ratio. To further improve the precision of the initial sparse network model, the sparsity ratio of each network layer in the initial sparse network model is optimized, to obtain the optimized network model. In this case, when it is ensured that an average value of optimized sparsity ratios of the plurality of network layers is the same as the target sparsity ratio, the optimized network model may include a network layer with an optimized sparsity ratio of 0%. That is, the optimized network model includes a network layer that does not need structured sparsity. If the precision of the optimized network model reaches the target precision, the optimized network model is directly determined as the deep learning network model obtained through structured sparsity. In other words, the deep learning network model obtained through structured sparsity can be obtained by performing structured sparsity only on some of the plurality of to-be-sparsified network layers included in the deep learning network model.

Certainly, during actual application, the precision of the optimized network model may alternatively not reach the target precision. In this case, an element scaling operator is added to each network layer in the optimized network model, where the element scaling operator is used to scale elements in an output matrix of a target operator at a network layer at which the element scaling operator is located. A scaling ratio of the element scaling operator at each network layer in the optimized network model is optimized based on an initial ratio range and a plurality of granularities, to obtain the deep learning network model that is obtained through structured sparsity.

To be specific, when the precision of the initial sparse network model cannot meet the use requirement of the user, the sparsity ratio of each network layer in the initial sparse network model is first optimized, to obtain the optimized network model. When the precision of the optimized network model still cannot meet the use requirement of the user, the scaling ratio of the element scaling operator at each network layer in the optimized network model is optimized to further improve the precision of the optimized network model, to obtain the deep learning network model that is obtained through structured sparsity.

It should be noted that, when the precision of the initial sparse network model cannot meet the use requirement of the user, further improving the precision of the initial sparse network model by only optimizing the sparsity ratio of each network layer or by both optimizing the sparsity ratio of each network layer and optimizing the scaling ratio of the element scaling operator at each network layer is only an example. In addition, the foregoing method for improving a model precision is applicable only to a case in which the target sparsity mode is the overall sparsity mode. When the target sparsity mode is the partitioned sparsity mode, the target sparsity ratio of each network layer is fixed at N:R, and the optimized sparsity ratio of each network layer cannot be adaptively determined. Therefore, a model precision optimization method applicable to both the overall sparsity mode and the partitioned sparsity mode is proposed. To be specific, an element scaling operator is added to each network layer in the initial sparse network model, where the element scaling operator is used to scale elements in an output matrix of a target operator at a network layer at which the element scaling operator is located. A scaling ratio of the element scaling operator at each network layer in the initial sparse network model is optimized based on an initial ratio range and a plurality of granularities, to obtain a deep learning network model that is obtained through structured sparsity.

That is, when the target sparsity mode is the overall sparsity mode, only the sparsity ratio of each network layer is optimized, to obtain the optimized network model. Alternatively, only the scaling ratio of the element scaling operator at each network layer is optimized, to obtain the optimized network model. Alternatively, the sparsity ratio of each network layer is optimized, and the scaling ratio of the element scaling operator at each network layer is optimized, to obtain the optimized network model. When the target sparsity mode is the partitioned sparsity mode, the optimized network model can be obtained only by optimizing the scaling ratio of the element scaling operator at each network layer.

For example, according to the following steps (1) to (3), the scaling ratio of the element scaling operator at each network layer in the initial sparse network model is optimized by using a multi-granularity parameter search method.

(1) Assume that i=1, use the initial ratio range as an $i^{th}$ ratio range, select an $i^{th}$ granularity from the plurality of granularities in descending order, and search, based on the $i^{th}$ granularity, the $i^{th}$ ratio range for a reference scaling ratio corresponding to each network layer, where the reference scaling ratio is a scaling ratio used when a corresponding network layer has a maximum precision.

(2) When i is equal to a total quantity of the plurality of granularities, determine, as the deep learning network model obtained through structured sparsity, a network model in which the scaling ratio of the element scaling operator at each network layer is the reference scaling ratio.

(3) When i is less than a total quantity of the plurality of granularities, assume that i=i+1, determine, based on an (i-1)th granularity and an ith granularity among the plurality of granularities in descending order and the reference scaling ratio corresponding to each network layer, an ith ratio range corresponding to each network layer, and return to the step of searching, based on the ith granularity, the ith ratio range for a reference scaling ratio corresponding to each network layer.

In this solution, the scaling ratio of the element scaling operator at each network layer is optimized through cyclic iteration, to obtain the optimized network model. i being equal to the total quantity of the plurality of granularities indicates that a current optimized network model is reliable. In this case, iterative processing is stopped, and the current optimized network model is determined as the deep learning network model obtained through structured sparsity. i being less than the total quantity of the plurality of granularities indicates that a current optimized network model is unreliable. In this case, a network model obtained through ith iterative processing is used as a network model for (i+1)th iterative processing, to continue to perform (i+1)th iterative processing.

According to a second aspect, a structured sparsity method for a network model is provided, and is applied to a server. The method includes: receiving a target sparsity mode, a target sparsity ratio, a deep learning network model, a test sample set, and a target precision that are sent by a terminal; performing, based on a target sparsity mode and a target sparsity ratio, initial structured sparsity on each of a plurality of to-be-sparsified network layers included in a deep learning network model, to obtain an initial sparse network model; determining a precision of the initial sparse network model based on a test sample set; and when the precision of the initial sparse network model reaches the target precision, determining the initial sparse network model as a deep learning network model obtained through structured sparsity, and sending the deep learning network model obtained through structured sparsity to the terminal.

A quantity of elements in an input matrix of a target operator at each network layer in the initial sparse network model is less than a quantity of elements in an input matrix of a target operator at a corresponding network layer in the deep learning network model, and a dimension of an output matrix of the initial sparse network model is the same as a dimension of an output matrix of the deep learning network model.

According to a third aspect, an image classification method is provided. The method includes: inputting a to-be-classified target image to an image classification model, where the image classification model includes a plurality of sparse network layers; determining a feature matrix based on a mapping matrix of a target network layer, where the target network layer is any one of the plurality of network layers; pruning elements in the feature matrix to obtain a pruned feature matrix and a position matrix, where the position matrix indicates a position, in the feature matrix that exists before the pruning, of each element in the pruned feature matrix; inputting the pruned feature matrix to a target operator at the target network layer, to obtain a normalized matrix; determining an output matrix of the target network layer based on the position matrix and the normalized matrix; and determining, based on the output matrix of the target network layer, a classification result output by the image classification model.

The to-be-classified target image is input to the image classification model, and the to-be-classified target image is processed through the plurality of sparse network layers included in the image classification model. The elements in the feature matrix are pruned through the target network layer, to reduce time spent in performing inference by the target operator of the target network layer to obtain the normalized matrix. Because inference costs of the image classification model are related to inference costs of the target operator, computing overheads of the image classification model are further reduced by reducing time consumption of the target operator, so that the image classification model can more quickly output the classification result.

The target network layer includes a target sparsity operator, and the target sparsity operator has a target sparsity mode and a target sparsity ratio. The elements in the feature matrix are pruned based on the target sparsity mode and the target sparsity ratio by using the target sparsity operator, to obtain the pruned feature matrix and the position matrix.

The target sparsity mode includes an overall sparsity mode and a partitioned sparsity mode. In different cases, manners of pruning the elements in the feature matrix based on the target sparsity mode and the target sparsity ratio by using the target sparsity operator are different. Therefore, the following separately describes two cases.

In a first case, the target sparsity mode is the overall sparsity mode, the target sparsity ratio is M%, M is greater than 0 and less than 100, and the target sparsity operator is a first sparsity operator. In this case, the first 1-M% of elements with largest values among elements of a target dimension in the feature matrix are retained by using the first sparsity operator, and a position of each retained element is determined, to obtain the pruned feature matrix and the position matrix.

To be specific, when the target sparsity mode is the overall sparsity mode, values of elements of the target dimension in the feature matrix are directly compared with each other, to retain the first 1-M% of elements with largest values, to obtain the pruned feature matrix.

In a second case, the target sparsity mode is the partitioned sparsity mode, the target sparsity ratio is N:R, both N and R are integers greater than or equal to 1, N is less than R, and the target sparsity operator is a second sparsity operator.

In this case, the first N elements with largest values among every R elements of a target dimension in the feature matrix are retained by using the second sparsity operator, and a position of each retained element is determined, to obtain the pruned feature matrix and the position matrix.

To be specific, when the target sparsity mode is the partitioned sparsity mode, elements of the target dimension in the feature matrix are first divided into a plurality of areas, and each of the plurality of areas includes R adjacent elements. Then, for each of the plurality of areas, values of R elements included in the area are compared with each other, to retain the first N elements with largest values in the area, to obtain the pruned feature matrix.

Optionally, the target network layer further includes an element scaling operator. After the pruned feature matrix is input to the target operator at the target network layer to obtain the normalized matrix, elements in the normalized matrix can be further scaled by using the element scaling operator. In this case, determining the output matrix of the target network layer directly based on the position matrix and the normalized matrix is merely an example. Optionally, the output matrix of the target network layer can be further determined based on the position matrix and a scaled normalized matrix, to further improve accuracy of the output matrix of the target network layer.

According to a fourth aspect, a structured sparsity apparatus for a network model is provided. The structured sparsity apparatus for a network model has a function of implementing the behavior in the structured sparsity method for a network model in the first aspect. The structured sparsity apparatus for a network model includes at least one module, and the at least one module is configured to implement the structured sparsity method for a network model provided in the first aspect.

According to a fifth aspect, a structured sparsity apparatus for a network model is provided. The structured sparsity apparatus for a network model has a function of implementing the behavior in the structured sparsity method for a network model in the second aspect. The structured sparsity apparatus for a network model includes at least one module, and the at least one module is configured to implement the structured sparsity method for a network model provided in the second aspect.

According to a sixth aspect, a structured sparsity system for a network model is provided. The structured sparsity system for a network model includes a terminal and a server.

The terminal is configured to send a target sparsity mode, a target sparsity ratio, a deep learning network model, a test sample set, and a target precision to the server.

The server is configured to: receive the target sparsity mode, the target sparsity ratio, the deep learning network model, the test sample set, and the target precision that are sent by the terminal; and perform, based on the target sparsity mode and the target sparsity ratio, initial structured sparsity on each of a plurality of to-be-sparsified network layers included in the deep learning network model, to obtain an initial sparse network model.

The server is further configured to: determine a precision of the initial sparse network model based on the test sample set; and when the precision of the initial sparse network model reaches the target precision, determine the initial sparse network model as a deep learning network model obtained through structured sparsity, and send the deep learning network model obtained through structured sparsity to the terminal.

According to a seventh aspect, an image classification apparatus is provided. The image classification apparatus has a function of implementing the behavior in the image classification method in the third aspect. The image classification apparatus includes at least one module, and the at least one module is configured to implement the image classification method provided in the third aspect.

According to an eighth aspect, a computer device is provided. The computer device includes a processor and a memory. The memory is configured to store a computer program for performing the method provided in the first aspect, the second aspect, or the third aspect. The processor is configured to execute the computer program stored in the memory, to implement the method according to the first aspect, the second aspect, or the third aspect.

Optionally, the computer device may further include a communication bus, and the communication bus is configured to establish a connection between the processor and the memory.

According to a ninth aspect, a computer-readable storage medium is provided. The storage medium stores instructions. When the instructions are run on a computer, the computer is enabled to perform the steps of the method according to the first aspect, the second aspect, or the third aspect.

According to a tenth aspect, a computer program product including instructions is provided. When the instructions are run on a computer, the computer is enabled to perform the steps of the method according to the first aspect, the second aspect, or the third aspect. In other words, a computer program is provided, and when the computer program is run on a computer, the computer is enabled to perform the steps of the method according to the first aspect, the second aspect, or the third aspect.

According to an eleventh aspect, a chip is provided. The chip includes a programmable logic circuit and program instructions. When running on a computer, the chip is configured to implement the steps of the method according to the first aspect, the second aspect, or the third aspect.

Technical effects achieved in the second aspect to the eleventh aspect are similar to technical effects achieved by corresponding technical means in the first aspect. Details are not described herein again.

## BRIEF DESCRIPTION OF DRAWINGS

FIG. 1 is a diagram of processing inference data by a network layer including a self-attention module according to an embodiment of this application;

FIG. 2 is a diagram of data distribution of elements in a normalized matrix at a shallow network layer that is at a lower network layer;

FIG. 3 is a diagram of data distribution of elements in a normalized matrix at a deep network layer that is at an upper network layer;

FIG. 4 is a diagram of an architecture of a computer device according to an embodiment of this application;

FIG. 5 is a flowchart of a structured sparsity method for a network model according to an embodiment of this application;

FIG. 6 is a flowchart of another structured sparsity method for a network model according to an embodiment of this application;

FIG. 7 is a flowchart of an image classification method according to an embodiment of this application;

FIG. 8 is a diagram of pruning elements in a feature matrix according to an embodiment of this application;

FIG. 9 is another diagram of pruning elements in a feature matrix according to an embodiment of this application;

FIG. 10 is a flowchart of a question answering method according to an embodiment of this application;

FIG. 11 is a diagram of a structure of a structured sparsity apparatus for a network model according to an embodiment of this application;

FIG. 12 is a diagram of a structure of another structured sparsity apparatus of a network model according to an embodiment of this application;

FIG. 13 is a diagram of a structure of an image classification apparatus according to an embodiment of this application; and

FIG. 14 is a diagram of a structure of a computer device according to an embodiment of this application.

## DESCRIPTION OF EMBODIMENTS

To make the objectives, technical solutions, and advantages of this application clearer, the following further describes implementations of this application in detail with reference to the accompanying drawings.

Before a structured sparsity method for a network model and an image classification method that are provided in embodiments of this application are described in detail, terms, service scenarios, and a system architecture in embodiments of this application are first described.

For ease of understanding, the terms in embodiments of this application are first described.

**Normalized exponential (softmax) operator:** As a generalization of a logistic function, this operator normalizes a gradient logarithm of discrete probability distribution of finite terms. The softmax operator is widely used in related fields that are based on probabilistic classification problems, such as multinomial logistic regression, multinomial linear discriminant analysis, a naive Bayes classifier, and an artificial neural network.

**Visual transformer (visual transformer, ViT):** a transformer whose architecture is designed for visual processing tasks, for example, image classification tasks.

**Shifted windows-based hierarchical visual transformer (shifted windows transformer, Swin):** a transformer widely used in the visual field. The transformer enhances a perception capability for a high variation between high-resolution image pixels through shifted windows.

**Bidirectional encoder representations from transformers (bidirectional encoder representations from transformers, BERT):** a pre-trained transformer using natural language processing. The transformer is the most important baseline in the field of deep learning for natural language processing in recent years.

Then the service scenarios in embodiments of this application are described.

A deep learning network model can be applied to a plurality of different fields such as computer vision and natural language processing. In the field of computer vision, the deep learning network model is applicable to different types of task scenarios such as semantic segmentation, image classification, object detection, and image generation. In the field of natural language processing, the deep learning network model is applicable to different types of task scenarios such as language modeling, question answering, machine translation, and sentiment analysis.

Wide application of the deep learning network model depends on a plurality of network layers included in the deep learning network model. For example, after receiving inference data, any one of the plurality of network layers maps the inference data based on a related algorithm, to obtain a mapping matrix; determines a feature matrix based on the mapping matrix; inputs the feature matrix to a target operator of the network layer, to obtain a normalized matrix; and then determines an output matrix of the network layer based on the normalized matrix and the mapping matrix, and then an inference result of the deep learning network model based on the output matrix of the network layer.

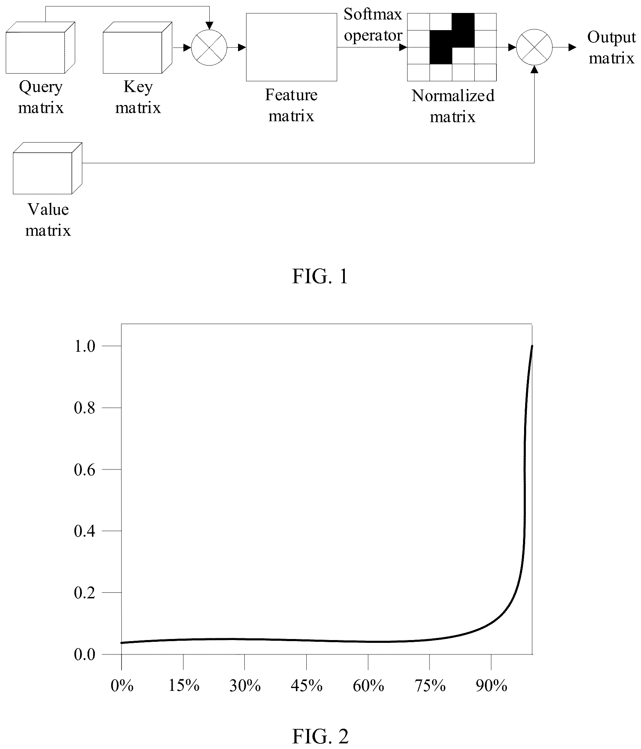

Optionally, the plurality of network layers each include a module using a self-attention mechanism, and the target operator is a softmax operator. For ease of description, the module using the self-attention mechanism is referred to as a self-attention module. That is, wide application of the deep learning network model is implemented by using the plurality of network layers including the self-attention module. For example, FIG. 1 is a diagram of processing inference data by a network layer including a self-attention module according to an embodiment of this application. In FIG. 1, after receiving the inference data, the network layer maps, based on a related algorithm, the inference data to three mapping matrices: a query matrix, a key matrix, and a value matrix, where the query matrix, the key matrix, and the value matrix each include elements in three dimensions; determines a feature matrix based on two same dimensions in the query matrix and the key matrix; inputs the feature matrix to a softmax operator of the self-attention module, to obtain a normalized matrix; and then determines an output matrix of the network layer based on the normalized matrix and the value matrix.

Elements in the normalized matrix indicate probability distribution of the inference data, and a sum of elements in a same row in the normalized matrix is always 1. For example, in FIG. 1, magnitudes of probabilities are indicated by intensity of colors of elements. An element with a darker color corresponds to a higher probability, and an element with a lighter color corresponds to a lower probability.

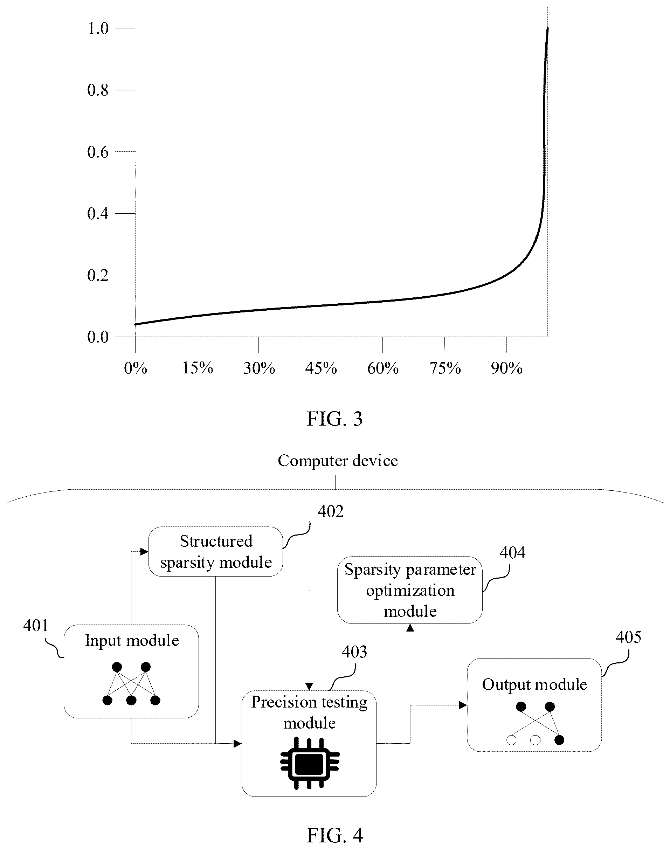

The elements in the normalized matrix are converted into diagrams of data distribution shown in FIG. 2 and FIG. 3. FIG. 2 is a diagram of data distribution of elements in a normalized matrix at a shallow network layer that is at a lower network layer. FIG. 3 is a diagram of data distribution of elements in a normalized matrix at a deep network layer that is at an upper network layer. It can be learned from FIG. 2 and FIG. 3 that, regardless of the shallow network layer or the deep network layer, values of 90% of the elements in the normalized matrix are less than 0.2. To be specific, more than 90% of the elements in the normalized matrix contribute quite little to 1, and the elements in the normalized matrix are naturally sparse. In this case, the 90% of the elements may not be required during subsequent computing of an inference result, and have little impact on an inference result output by the deep learning network model. However, in a process of inputting the feature matrix to the softmax operator of the self-attention module to obtain the normalized matrix, the softmax operator of the self-attention module still needs to process the 90% of the elements. Consequently, computing overheads of performing inference by the deep learning network model are high.

The normalized matrix is an output matrix of the softmax operator. According to characteristics of the softmax operator, when the output matrix of the softmax operator is sparse, an input matrix of the softmax operator is also sparse. Therefore, when inference is performed by using the deep learning network model, to reduce computing overheads of the deep learning network model, structured sparsity may be performed, according to the method provided in embodiments of this application, on each of a plurality of to-be-sparsified network layers included in the deep learning network model.

Finally, the system architecture in embodiments of this application is described.

The structured sparsity method for a network model provided in embodiments of this application is performed by a computer device. FIG. 4 is a diagram of an architecture of a computer device according to an embodiment of this application. The computer device includes an input module 401, a structured sparsity module 402, a precision testing module 403, a sparsity parameter optimization module 404, and an output module 405. A user inputs a deep learning network model, a target sparsity mode, and a target sparsity ratio through the input module 401. The input module 401 sends the deep learning network model, the target sparsity mode, and the target sparsity ratio to the structured sparsity module 402. The structured sparsity module 402 receives the deep learning network model, the target sparsity mode, and the target sparsity ratio that are sent by the input module 401; and performs, based on the target sparsity mode and the target sparsity ratio, initial structured sparsity on each of a plurality of to-be-sparsified network layers included in the deep learning network model, to obtain an initial sparse network model. The structured sparsity module 402 sends the initial sparse network model to the precision testing module 403. The user further inputs a test sample set and a target precision through the input module 401. The input module 401 sends the test sample set and the target precision to the precision testing module 403. The precision testing module 403 receives the initial sparse network model sent by the structured sparsity module 402, and the test sample set and the target precision that are sent by the input module 401; and then determines a precision of the initial sparse network model through an artificial intelligence (artificial intelligence, AI) chip. The sparsity parameter optimization module 404 is configured to: when the precision of the initial sparse network model does not reach the target precision, optimize a sparsity ratio of each network layer in the initial sparse network model, to obtain an optimized network model. Then the precision testing module 403 determines a precision of the optimized network model, where the precision of the optimized network model reaches the target precision. The output module 405 is configured to output the optimized network model whose precision reaches the target precision.

That is, according to the structured sparsity method for a network model provided in embodiments of this application, the user only needs to input the deep learning network model, the target sparsity mode, the target sparsity ratio, the test sample set, and the target precision to the computer device, and subsequently, a deep learning network model obtained through structured sparsity can be obtained through interaction between the modules included in the computer device, to implement model inference with low overheads and low awareness.

The computer device may be any electronic product that can perform human-computer interaction with the user through one or more of the following: a keyboard, a touchpad, a touchscreen, a remote control, a voice interaction device, a handwriting device, or the like. For example, the computer device is a personal computer (personal computer, PC), a mobile phone, a smartphone, a personal digital assistant (personal digital assistant, PDA), a wearable device, a pocket personal computer (pocket PC, PPC), a tablet computer, a smart screen, or a vehicle-mounted speaker.

A person skilled in the art should understand that the foregoing computer devices are merely examples. Other existing or possible future computer devices to which embodiments of this application are applicable should also fall within the protection scope of embodiments of this application, and are included herein by reference.

It should be noted that the service scenarios and the system architecture described in embodiments of this application are intended to describe the technical solutions in embodiments of this application more clearly, but constitute no limitation on the technical solutions provided in embodiments of this application. A person of ordinary skill in the art can know that the technical solutions provided in embodiments of this application are also applicable to a similar technical problem with emergence of a new service scenario and evolution of the system architecture.

The following describes in detail the structured sparsity method for a network model provided in embodiments of this application.

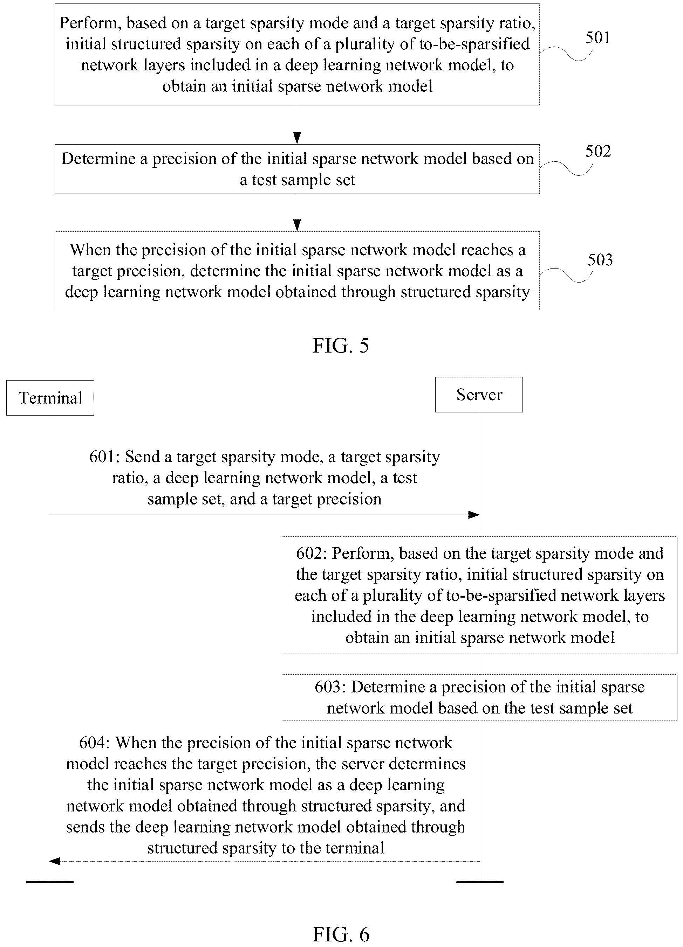

FIG. 5 is a flowchart of a structured sparsity method for a network model according to an embodiment of this application. Refer to FIG. 5. The method includes the following steps.

**Step 501:** Perform, based on a target sparsity mode and a target sparsity ratio, initial structured sparsity on each of a plurality of to-be-sparsified network layers included in a deep learning network model, to obtain an initial sparse network model.

A quantity of elements in an input matrix of a target operator at each network layer in the initial sparse network model is less than a quantity of elements in an input matrix of a target operator at a corresponding network layer in the deep learning network model, and a dimension of an output matrix of the initial sparse network model is the same as a dimension of an output matrix of the deep learning network model.

Optionally, the plurality of network layers each include a module using a self-attention mechanism, and the target operator is a softmax operator. Based on the foregoing descriptions, an input matrix of the softmax operator is sparse, and the softmax operator is a parameter of the self-attention module. It can be learned that the self-attention module included in the network layer is sparse. This is equivalent to that the network layer including the self-attention module in the deep learning network model is sparse. Therefore, performing initial structured sparsity on each network layer including the self-attention module in the deep learning network model is equivalent to performing initial structured sparsity on the self-attention module included in each network layer.

It should be noted that, during actual application, in addition to the plurality of to-be-sparsified network layers, the deep learning network model may further include another type of network layer. In addition, the plurality of network layers may further include a module using another mechanism. This is not limited in this embodiment of this application.

Because processes of performing initial structured sparsity on all of the plurality of network layers are the same, any one of the plurality of network layers is used as a target network layer. The following uses the target network layer as an example to describe a process of performing initial structured sparsity on the target network layer. For a process of performing initial structured sparsity on another network layer among the plurality of network layers, refer to the process of performing initial structured sparsity on the target network layer.

In some embodiments, initial structured sparsity is performed on the target network layer according to the following steps (1) and (2).

(1) Add a target sparsity operator to the target network layer based on the target sparsity mode and the target sparsity ratio, where the target sparsity operator is used to prune elements in an input matrix of a target operator at the target network layer.

To be specific, initial structured sparsity is performed on the target network layer by using the target sparsity operator, to reduce a quantity of elements in the input matrix of the target operator at the target network layer. This can resolve a problem that a large amount of time needs to be spent in inference of the target operator at the target network layer, to reduce computing overheads of the deep learning network model.

The target sparsity mode includes an overall sparsity mode and a partitioned sparsity mode. In different cases, manners of adding the target sparsity operator to the target network layer based on the target sparsity mode and the target sparsity ratio are different. Therefore, the following separately describes two cases.

**In a first case,** the target sparsity mode is the overall sparsity mode, the target sparsity ratio is M%, and M is greater than 0 and less than 100. In this case, a first sparsity operator is added to the target network layer based on the target sparsity mode and the target sparsity ratio, where the first sparsity operator is used to prune elements of a target dimension in the input matrix of the target operator at the target network layer, to retain the first 1-M% of elements with largest values in the target dimension.

That is, when the target sparsity mode is the overall sparsity mode, the first sparsity operator is added to the target network layer, and parameters corresponding to the first sparsity operator are the overall sparsity mode and the target sparsity ratio. In this way, the elements of the target dimension in the input matrix of the target operator at the target network layer can be subsequently centrally pruned by using the first sparsity operator, to improve element pruning efficiency.

The target dimension includes any one of a matrix row dimension and a matrix column dimension. When the target dimension is the matrix row dimension, the elements in the input matrix of the target operator at the target network layer are pruned row by row by using the first sparsity operator. When the target dimension is the matrix column dimension, the elements in the input matrix of the target operator at the target network layer are pruned column by column by using the first sparsity operator. Certainly, during actual application, the input matrix of the target operator may alternatively include another dimension, for example, a matrix channel dimension. This is not limited in this embodiment of this application.

**In a second case,** the target sparsity mode is the partitioned sparsity mode, the target sparsity ratio is N:R, both N and R are integers greater than or equal to 1, and N is less than R. In this case, a second sparsity operator is added to the target network layer based on the target sparsity mode and the target sparsity ratio, where the second sparsity operator is used to prune elements of a target dimension in the input matrix of the target operator at the target network layer, to retain the first N elements with largest values among every R elements of the target dimension.

That is, when the target sparsity mode is the partitioned sparsity mode, the second sparsity operator is added to the target network layer, and parameters corresponding to the second sparsity operator are the partitioned sparsity mode and the target sparsity ratio. Due to a limitation of hardware settings of a computer device, bandwidth used by the computer device to process a data stream is usually quite low. Consequently, the computer device cannot simultaneously prune the elements of the target dimension in the input matrix of the target operator. Therefore, the elements of the target dimension in the input matrix of the target operator are first divided into a plurality of areas based on the bandwidth used by the computer device to process a data stream. Each of the plurality of areas includes R adjacent elements. Then partitioned pruning is performed on the elements of the target dimension in the input matrix of the target operator at the target network layer by using the second sparsity operator. R is preset based on the bandwidth used by the computer device to process a data stream, and R is small relative to a total quantity of elements of the target dimension in the input matrix of the target operator.

(2) Add a matrix processing operator to the target network layer, where the matrix processing operator is used to process a mapping matrix of the target network layer based on a pruning result of the target sparsity operator, to enable a dimension of an output matrix of the target network layer to remain the same before and after initial structured sparsity is performed on the target network layer.

The pruning result of the target sparsity operator includes a position matrix, and the matrix processing operator determines, based on the position matrix and a related algorithm, value elements corresponding to each row of elements in a normalized matrix from the mapping matrix of the target network layer. The position matrix indicates a position, in the feature matrix that exists before the pruning, of each element in the pruned feature matrix. The mapping matrix of the target network layer is obtained by mapping to-be-inferred data by the target network layer based on a related algorithm. The normalized matrix is obtained by processing the pruned feature matrix by using the target operator.

To be specific, initial structured sparsity is performed on the target network layer by using the matrix processing operator, to ensure isomorphism between output matrices of the target network layer that exist before and after the initial structured sparsity, so that a target network layer obtained through initial structured sparsity is still applicable to an original network structure.

**Step 502:** Determine a precision of the initial sparse network model based on a test sample set.

The test sample set includes a plurality of groups of sample data, and each of the plurality of groups of sample data includes a test sample and a sample labeling result. The test sample is input to the initial sparse network model, to obtain a sample test result output by the initial sparse network model. The precision of the initial sparse network model is determined based on the sample test result, the sample labeling result, and a related algorithm.

In some embodiments, the plurality of groups of sample data include data of a text type, data of an image type, data of a video type, data of an audio type, and the like.

Based on the foregoing descriptions, the deep learning network model is applicable to different types of task scenarios, such as semantic segmentation, image classification, language modeling, and question answering. In some embodiments, when a task scenario to which the deep learning network model is applicable is image classification, the test sample set includes a test image and a classification labeling result. When a task scenario to which the deep learning network model is applicable is question answering, the test sample set includes a test question in a text format and an answer labeling result.

The following uses image classification as an example to thoroughly describe how to determine the precision of the initial sparse network model based on the test sample set.

In a scenario in which the deep learning network model is applied to image classification, the test sample set includes a plurality of groups of sample data, and each group of sample data includes a test image and a classification labeling result. The test image is input to the initial sparse network model, to obtain a classification result output by the initial sparse network model. Then the precision of the initial sparse network model is calculated based on the classification result output by the initial sparse network model, the classification labeling result, and a related algorithm.

**Step 503:** When the precision of the initial sparse network model reaches a target precision, determine the initial sparse network model as a deep learning network model obtained through structured sparsity.

Because the target precision is preset by a user according to a use requirement, the precision of the initial sparse network model reaching the target precision indicates that the precision of the initial sparse network model obtained through initial structured sparsity can meet the use requirement of the user. Therefore, the initial sparse network model is directly determined as the deep learning network model obtained through structured sparsity.

Certainly, during actual application, the precision of the initial sparse network model may alternatively not reach the target precision. In this case, a sparsity ratio of each network layer in the initial sparse network model is optimized based on the target precision, the target sparsity ratio, and the test sample set, to obtain a deep learning network model that is obtained through structured sparsity. To be specific, when the precision of the initial sparse network model cannot meet a use requirement of a user, the sparsity ratio of each network layer in the initial sparse network model is optimized to further improve the precision of the initial sparse network model.

In some embodiments, the sparsity ratio of each network layer in the initial sparse network model is optimized according to the following steps (1) to (5).

(1) Determine sensitivity of each network layer in the initial sparse network model based on the target precision and the test sample set.

A precision of each network layer in the initial sparse network model is determined based on the test sample set. The sensitivity of each network layer is determined based on the target precision and the precision of each network layer.

Sparsity ratios of all network layers in the initial sparse network model are the same, and are the target sparsity ratio. For any network layer in the initial sparse network model, a sparsity ratio of the network layer is fixed at the target sparsity ratio, and a sparsity ratio of another network layer is adjusted to 0, to obtain a test model corresponding to the network layer. Based on the foregoing descriptions, the test sample set includes a plurality of groups of sample data, and each of the plurality of groups of sample data includes a test sample and a sample labeling result. The test sample is input to the test model corresponding to the network layer, to obtain a sample test result output by the test model corresponding to the network layer. A precision of the test model corresponding to the network layer is determined based on the sample test result, the sample labeling result, and a related algorithm. Then the precision of the test model corresponding to the network layer is determined as a precision of the network layer. That is, the precision of each network layer in the initial sparse network model is a precision of the initial sparse network model in a case in which initial structured sparsity is performed only on a corresponding network layer based on a target sparsity ratio, and initial structured sparsity is not performed on another network layer.

In an example, the sensitivity of each network layer is determined based on the target precision and the precision of each network layer according to the following formula (1):

$$Sense_c = \frac{\overline{ACC_c}}{ACC_{max}} = \frac{ACC_{baseline} - ACC_c}{ACC_{max}} \qquad (1)$$

In the formula (1), $Sense_c$ represents sensitivity of a $c^{th}$ network layer, $\overline{ACC_c}$ represents a precision deviation between a precision of the $c^{th}$ network layer and the target precision, $\overline{ACC_{max}}$ represents a largest one of precision deviations respectively corresponding to the plurality of network layers, $ACC_{baseline}$ represents the target precision, and $ACC_c$ represents the precision of the $c^{th}$ network layer, to be specific, a precision of the initial sparse network model in a case in which sparsity ratios of all of other network layers are 0, and only a sparsity ratio of the $c^{th}$ network layer is the target sparsity ratio.

Because target operators at different network layers have different degrees of sparsity, after initial structured sparsity is performed on the network layers based on a same target sparsity ratio, the network layers have different sensitivity to sparsity. Sensitivity of a network layer indicates a precision loss of the network layer. Higher sensitivity of a network layer indicates a worse precision loss of the network layer.

(2) Determine an optimized sparsity ratio of each network layer based on the sensitivity of each network layer, a quantity of the plurality of network layers, a total quantity of elements of the target dimension, and the target sparsity ratio.

In an example, the optimized sparsity ratio of each network layer is determined according to the following formulas (2) and (3):

$$\sum_{c=1}^{L}\left(0.1W + Sense_c \times Y\right) = \partial \times W \times L \qquad (2)$$

$$\partial_c = 0.1 + \frac{Sense_c \times Y}{W} \qquad (3)$$

In the formulas (2) and (3), $L$ represents a quantity of the plurality of network layers, $W$ represents a total quantity of elements of the target dimension, $Y$ represents an intermediate variable that needs to be solved, $\partial$ represents the target sparsity ratio, and $\partial_c$ represents an optimized sparsity ratio of the $c^{th}$ network layer.

To be specific, when it is ensured that an average value of optimized sparsity ratios of the plurality of network layers is the same as the target sparsity ratio, the intermediate variable $Y$ is first calculated according to the formula (2) based on the sensitivity $Sense_c$ of each network layer, the quantity $L$ of the plurality of network layers, the total quantity $W$ of elements of the target dimension, and the target sparsity ratio $\partial$. Then the sensitivity $Sense_c$ of each network layer, the intermediate variable $Y,$ and the total quantity $W$ of elements of the target dimension are substituted into the formula (3), to obtain the optimized sparsity ratio $\partial_c$ of each network layer. The optimized sparsity ratio of each network layer is adaptively determined based on the sensitivity of each network layer, and it is ensured that an average optimized sparsity ratio of the plurality of network layers is the same as the target sparsity ratio.

(3) Optimize the sparsity ratio of each network layer in the initial sparse network model based on the optimized sparsity ratio of each network layer, to obtain an optimized network model.

After the optimized sparsity ratio of each network layer is determined according to step (2), the sparsity ratio M% of each network layer in the initial sparse network model is replaced with an optimized sparsity ratio of a corresponding network layer, to obtain the optimized network model. Sparsity ratios of different network layers in the optimized network model are different from each other. To be specific, when the target sparsity mode is the overall sparsity mode, for each network layer in the initial sparse network model, a target sparsity ratio M% corresponding to a first sparsity operator at the network layer is replaced with an optimized sparsity ratio of the network layer. In this way, each network layer in the optimized network model can adaptively prune elements of a target dimension in an input matrix of a target operator based on a corresponding optimized sparsity ratio, to control a precision loss of the model to be within a small range, and improve a precision of the optimized network model.

It is assumed that the initial sparse network model includes six network layers, and sparsity ratios of all of the network layers are the same, and are a target sparsity ratio 80%. Related information of the optimized network model obtained by optimizing the sparsity ratio of each network layer in the initial sparse network model based on the target precision, the target sparsity ratio, and the test sample set is shown in Table 1. In Table 1, the optimized network model includes six network layers, sparsity ratios of the six network layers are 80%, 90%, 82%, 75%, 73%, and 80%, and an average optimized sparsity ratio of the six network layers is still 80%. It can be learned from Table 1 that higher sensitivity of a network layer indicates a lower optimized sparsity ratio of the network layer, and lower sensitivity of a network layer indicates a higher optimized sparsity ratio of the network layer.

Table 1

| Network layer number | 1 | 2 | 3 | 4 | 5 | 6 |
|---|---|---|---|---|---|---|
| Sensitivity $Sense_c$ | 0.854 | 0.649 | 0.805 | 0.951 | 1.000 | 0.854 |
| Optimized sparsity ratio $\partial_c$ | 80% | 90% | 82% | 75% | 73% | 80% |
| Total quantity of elements of the target dimension | 50 | 50 | 50 | 100 | 100 | 100 |
| Quantity of retained elements of the target dimension | 10 | 5 | 9 | 25 | 27 | 20 |

(4) Determine a precision of the optimized network model based on the test sample set.

A process of determining the precision of the optimized network model based on the test sample set is similar to the process of determining the precision of the initial sparse network model based on the test sample set in step 502. Therefore, refer to related content in step 502. Details are not described herein again.

(5) When the precision of the optimized network model reaches the target precision, determine the optimized network model as the deep learning network model obtained through structured sparsity.

The precision of the optimized network model reaching the target precision indicates that the optimized network model can meet the use requirement of the user. Therefore, the optimized network model is directly determined as the deep learning network model obtained through structured sparsity.

It should be noted that initial structured sparsity is first performed on each of the plurality of network layers based on the target sparsity mode and the target sparsity ratio, to obtain the initial sparse network model. Sparsity ratios of all of the plurality of network layers included in the initial sparse network model are the same, and are the target sparsity ratio. To further improve the precision of the initial sparse network model, the sparsity ratio of each network layer in the initial sparse network model is optimized, to obtain the optimized network model. In this case, when it is ensured that an average value of optimized sparsity ratios of the plurality of network layers is the same as the target sparsity ratio, the optimized network model may include a network layer with an optimized sparsity ratio of 0%. That is, the optimized network model includes a network layer that does not need structured sparsity. If the precision of the optimized network model reaches the target precision, the optimized network model is directly determined as the deep learning network model obtained through structured sparsity. In other words, the deep learning network model obtained through structured sparsity can be obtained by performing structured sparsity only on some of the plurality of to-be-sparsified network layers included in the deep learning network model.

Certainly, during actual application, the precision of the optimized network model may alternatively not reach the target precision. In this case, an element scaling operator is added to each network layer in the optimized network model, where the element scaling operator is used to scale elements in an output matrix of a target operator at a network layer at which the element scaling operator is located. A scaling ratio of the element scaling operator at each network layer in the optimized network model is optimized based on an initial ratio range and a plurality of granularities, to obtain the deep learning network model that is obtained through structured sparsity.

To be specific, when the precision of the initial sparse network model cannot meet the use requirement of the user, the sparsity ratio of each network layer in the initial sparse network model is first optimized, to obtain the optimized network model. When the precision of the optimized network model still cannot meet the use requirement of the user, the scaling ratio of the element scaling operator at each network layer in the optimized network model is optimized to further improve the precision of the optimized network model, to obtain the deep learning network model that is obtained through structured sparsity.

A process of optimizing the scaling ratio of the element scaling operator at each network layer in the optimized network model is similar to a process of optimizing a scaling ratio of an element scaling operator at each network layer in the initial sparse network model in the following descriptions. Therefore, refer to related content in the following descriptions. Details are not described herein.

It should be noted that, when the precision of the initial sparse network model cannot meet the use requirement of the user, further improving the precision of the initial sparse network model by only optimizing the sparsity ratio of each network layer or by both optimizing the sparsity ratio of each network layer and optimizing the scaling ratio of the element scaling operator at each network layer is only an example. In addition, the foregoing method for improving a model precision is applicable only to a case in which the target sparsity mode is the overall sparsity mode. When the target sparsity mode is the partitioned sparsity mode, the target sparsity ratio of each network layer is fixed at N:R, and the optimized sparsity ratio of each network layer cannot be adaptively determined. Therefore, in some other embodiments, a model precision optimization method applicable to both the overall sparsity mode and the partitioned sparsity mode is proposed. To be specific, an element scaling operator is added to each network layer in the initial sparse network model, where the element scaling operator is used to scale elements in an output matrix of a target operator at a network layer at which the element scaling operator is located. A scaling ratio of the element scaling operator at each network layer in the initial sparse network model is optimized based on an initial ratio range and a plurality of granularities, to obtain a deep learning network model that is obtained through structured sparsity.

That is, when the target sparsity mode is the overall sparsity mode, only the sparsity ratio of each network layer is optimized, to obtain the optimized network model. Alternatively, only the scaling ratio of the element scaling operator at each network layer is optimized, to obtain the optimized network model. Alternatively, the sparsity ratio of each network layer is optimized, and the scaling ratio of the element scaling operator at each network layer is optimized, to obtain the optimized network model. When the target sparsity mode is the partitioned sparsity mode, the optimized network model can be obtained only by optimizing the scaling ratio of the element scaling operator at each network layer.

A sum of elements in a same row in the output matrix of the target operator is always 1. Elements in an input matrix of the target operator that is obtained by pruning the elements in the input matrix of the target operator by using the target sparsity operator are significantly magnified compared with the elements existing before the pruning. Therefore, after the input matrix obtained by pruning the elements is input to the target operator to obtain the output matrix of the target operator, some elements with small values are inevitably ignored in the output matrix of the target operator, affecting the precision of the initial sparse network model. To reduce this negative effect caused by pruning the elements in the input matrix of the target operator, an element scaling operator is added to each network layer, and a scaling ratio of the element scaling operator is optimized, to further improve the precision of the initial sparse network model.

For example, according to the following steps (1) to (3), the scaling ratio of the element scaling operator at each network layer in the initial sparse network model is optimized by using a multi-granularity parameter search method.

(1) Assume that i=1, use the initial ratio range as an $i^{th}$ ratio range, select an $i^{th}$ granularity from the plurality of granularities in descending order, and search, based on the $i^{th}$ granularity, the $i^{th}$ ratio range for a reference scaling ratio corresponding to each network layer, where the reference scaling ratio is a scaling ratio used when a corresponding network layer has a maximum precision.

One granularity corresponds to one ratio range. The granularities are sequentially selected in descending order of the granularities. For any one of the plurality of granularities, by starting from a lower limit of a ratio range corresponding to the granularity, a plurality of scaling ratios are determined based on a magnitude of the granularity, where a difference between two adjacent scaling ratios among the plurality of scaling ratios is equal to the granularity. Then, by starting from the $1^{st}$ network layer among the plurality of network layers, a reference scaling ratio of the $1^{st}$ network layer in the ratio range corresponding to the granularity is determined. The reference scaling ratio corresponding to the $1^{st}$ network layer is kept unchanged, and a reference scaling ratio of the $2^{nd}$ network layer in the ratio range corresponding to the granularity is determined. The foregoing steps are repeated until a reference scaling ratio of each network layer in the ratio range corresponding to the granularity is determined. That is, in a same ratio range corresponding to a same granularity, a reference scaling ratio corresponding to each network layer is sequentially determined according to a sequence of the plurality of network layers.

An implementation process of determining the reference scaling ratio of the $1^{st}$ network layer in the ratio range corresponding to the granularity includes: keeping scaling ratios corresponding to other network layers unchanged; separately calculating, based on a related algorithm, precisions of the initial sparse network model in a case in which the $1^{st}$ network layer is at the plurality of scaling ratios, to obtain a plurality of precisions, where the plurality of precisions are in a one-to-one correspondence with the plurality of scaling ratios; and determining a scaling ratio with a highest precision among the plurality of scaling ratios as the reference scaling ratio of the $1^{st}$ network layer in the ratio range corresponding to the granularity.

It is assumed that the $1^{st}$ granularity is 0.3, and the $1^{st}$ ratio range corresponding to the $1^{st}$ granularity is [0.1, positive infinity], that is, the initial ratio range is [0.1, positive infinity]. By starting from the lower limit 0.1 of the $1^{st}$ ratio range, a plurality of scaling ratios such as 0.1, 0.4, 0.7, 1.00, and 1.30 are determined based on the $1^{st}$ granularity 0.3, and precisions of the initial sparse network model in a case in which each network layer is at different scaling ratios such as 0.1, 0.4, 0.7, 1.00, and 1.30 are sequentially calculated. For each network layer, a scaling ratio with a highest precision among the plurality of scaling ratios is determined as a reference scaling ratio of the network layer in the $1^{st}$ ratio range.

A lower limit and an upper limit of the initial ratio range are preset. For example, the lower limit of the initial ratio range is 0.1, and the upper limit of the initial ratio range is positive infinity. In addition, the lower limit and the upper limit of the initial ratio range may alternatively be adjusted according to different requirements. It should be noted that, when the upper limit of the initial ratio range is positive infinity, a reference scaling ratio of each network layer in the initial ratio range is the $1^{st}$ scaling ratio with a highest precision; or when the upper limit of the initial ratio range is not positive infinity, a reference scaling ratio of each network layer in the initial ratio range is a scaling ratio with a highest precision in the entire initial ratio range.

(2) When i is equal to a total quantity of the plurality of granularities, determine, as the deep learning network model obtained through structured sparsity, a network model in which the scaling ratio of the element scaling operator at each network layer is the reference scaling ratio.

(3) When i is less than a total quantity of the plurality of granularities, assume that i=i+1, determine, based on an $(i-1)^{th}$ granularity and an $i^{th}$ granularity among the plurality of granularities in descending order and the reference scaling ratio corresponding to each network layer, an $i^{th}$ ratio range corresponding to each network layer, and return to the step of searching, based on the $i^{th}$ granularity, the $i^{th}$ ratio range for a reference scaling ratio corresponding to each network layer.

In this embodiment of this application, the scaling ratio of the element scaling operator at each network layer is optimized through cyclic iteration, to obtain the optimized network model. i being equal to the total quantity of the plurality of granularities indicates that a current optimized network model is reliable. In this case, iterative processing is stopped, and the current optimized network model is determined as the deep learning network model obtained through structured sparsity. In this embodiment of this application, a reference scaling ratio corresponding to each network layer is sequentially determined according to a sequence of the plurality of network layers. After the reference scaling ratio corresponding to each network layer is determined, the scaling ratio of the element scaling operator at each network layer is replaced with a corresponding reference scaling ratio in real time. Therefore, when i is equal to the total quantity of the plurality of granularities, a current optimized network model obtained based on a reference scaling ratio corresponding to the last one of the plurality of network layers is the deep learning network model obtained through structured sparsity, and the scaling ratio of the element scaling operator at each network layer does not need to be centrally replaced with a corresponding reference scaling ratio. i being less than the total quantity of the plurality of granularities indicates that a current optimized network model is unreliable. In this case, a network model obtained through $i^{th}$ iterative processing is used as a network model for $(i+1)^{th}$ iterative processing, to continue to perform $(i+1)^{th}$ iterative processing.

The total quantity of the plurality of granularities is preset. For example, the total quantity of the plurality of granularities is 3. In addition, the total quantity of the plurality of granularities may alternatively be adjusted according to different requirements. This is not limited in this embodiment of this application.

Because processes of determining $i^{th}$ ratio ranges corresponding to all network layers are the same, one of the plurality of network layers is used as a target network layer. The following uses the target network layer as an example to describe a process of determining an $i^{th}$ ratio range corresponding to the target network layer.

In some embodiments, a difference between the $(i-1)^{th}$ granularity and the $i^{th}$ granularity is determined. The difference is subtracted from a reference scaling ratio corresponding to the target network layer, to obtain a lower limit of the $i^{th}$ ratio range corresponding to the target network layer, and the difference is added to the reference scaling ratio corresponding to the target network layer, to obtain an upper limit of the $i^{th}$ ratio range corresponding to the target network layer. In this way, the $i^{th}$ ratio range can be used to compensate for a single-peak blind area of an $(i-1)^{th}$ ratio range, so that the reference scaling ratio corresponding to each network layer is more accurately determined based on the $(i-1)^{th}$ ratio range and the $i^{th}$ ratio range.

Certainly, during actual application, the $i^{th}$ ratio range corresponding to the target network layer can alternatively be determined in another manner. This is not limited in this embodiment of this application. For example, the lower limit of the $i^{th}$ ratio range corresponding to the target network layer is a difference between the $i^{th}$ granularity and a first value, and the upper limit of the $i^{th}$ ratio range corresponding to the target network layer is a sum of the $i^{th}$ granularity and a second value. The first value and the second value are preset, and the first value and the second value may be the same or different.

It is assumed that the plurality of granularities include three granularities in descending order: 0.3, 0.05, and 0.01; and the initial ratio range is [0.1, positive infinity]. The $1^{st}$ network layer is used as an example. Based on the $1^{st}$ granularity 0.3, precisions of the initial sparse network model in a case in which the $1^{st}$ network layer is at different scaling ratios are determined from the $1^{st}$ ratio range [0.1, positive infinity]. It is assumed that the initial sparse network model has a maximum precision when a scaling ratio of the $1^{st}$ network layer is 1.30. In this case, a reference scaling ratio of the $1^{st}$ network layer in the $1^{st}$ ratio range is 1.30.

A difference between the $2^{nd}$ granularity 0.05 and the $1^{st}$ granularity 0.3 is 0.25. Because the reference scaling ratio of the $1^{st}$ network layer in the $1^{st}$ ratio range is 1.30, a lower limit of the $2^{nd}$ ratio range corresponding to the $1^{st}$ network layer is 1.30-0.25, and an upper limit of the $2^{nd}$ ratio range is 1.30+0.25. That is, the second ratio range corresponding to the $1^{st}$ network layer is [1.05, 1.55]. Then the $1^{st}$ network layer determines, from the $2^{nd}$ ratio range [1.05, 1.55] based on the $2^{nd}$ granularity 0.05, precisions of the initial sparse network model in a case in which the $1^{st}$ network layer is at different scaling ratios. It is assumed that the initial sparse network model has a maximum precision when a scaling ratio of the $1^{st}$ network layer is 1.35. In this case, a reference scaling ratio of the $1^{st}$ network layer in the $2^{nd}$ ratio range is 1.35.

A difference between the $3^{rd}$ granularity 0.01 and the $2^{nd}$ granularity 0.05 is 0.04. Because the reference scaling ratio of the $1^{st}$ network layer in the $2^{nd}$ ratio range is 1.35, a lower limit of the $3^{rd}$ ratio range corresponding to the $1^{st}$ network layer is 1.35-0.04, and an upper limit of the $3^{rd}$ ratio range is 1.35+0.04. That is, the $3^{rd}$ ratio range corresponding to the $1^{st}$ network layer is [1.31, 1.39]. Then the $1^{st}$ network layer determines, from the $3^{rd}$ ratio range [1.31, 1.39] based on the $3^{rd}$ granularity 0.01, precisions of the initial sparse network model in a case in which the $1^{st}$ network layer is at different scaling ratios. It is assumed that the initial sparse network model has a maximum precision when a scaling ratio of the $1^{st}$ network layer is 1.37. In this case, a reference scaling ratio of the $1^{st}$ network layer in the $3^{rd}$ ratio range is 1.37.

For example, related information of the deep learning network model obtained through structured sparsity that is obtained by optimizing the scaling ratio of the element scaling operator at each network layer based on the initial ratio range and the plurality of granularities is shown in Table 2 to Table 4. It can be learned from Table 2 that reference scaling ratios corresponding to the six network layers in the $1^{st}$ ratio range are 1.30, 1.00, 0.40, 0.70, 0.70, and 1.00. It can be learned from Table 3 that reference scaling ratios corresponding to the six network layers in the $2^{nd}$ ratio range are 1.35, 0.85, 0.45, 0.75, 0.55, and 0.90. It can be learned from Table 4 that reference scaling ratios corresponding to the six network layers in the $3^{rd}$ ratio range are 1.37, 0.83, 0.42, 0.76, 0.55, and 0.88. In this way, the reference scaling ratios corresponding to the six network layers in the $3^{rd}$ ratio range are determined as scaling ratios of corresponding network layers in the optimized network model, to obtain the deep learning network model obtained through structured sparsity.

Table 2

| Network layer number | 1 | 2 | 3 | 4 | 5 | 6 |
|---|---|---|---|---|---|---|
| Reference scaling ratio | 1.30 | 1.00 | 0.40 | 0.70 | 0.70 | 1.00 |

Table 3

| Network layer number | 1 | 2 | 3 | 4 | 5 | 6 |
|---|---|---|---|---|---|---|
| Reference scaling ratio | 1.35 | 0.85 | 0.45 | 0.75 | 0.55 | 0.90 |

Table 4

| Network layer number | 1 | 2 | 3 | 4 | 5 | 6 |
|---|---|---|---|---|---|---|
| Reference scaling ratio | 1.37 | 0.83 | 0.42 | 0.76 | *0.55* | 0.88 |

It should be noted that, for deep learning network models applied to different fields, the structured sparsity method for a network model provided in this embodiment of this application achieves excellent effect. For example, an experiment result obtained by performing initial structured sparsity on the deep learning network model in the overall sparsity mode is shown in Table 5, and an experiment result obtained by performing initial structured sparsity on the deep learning network model in the partitioned sparsity mode is shown in Table 6.

Both Table 5 and Table 6 include two different types of deep learning network models: an image classification model and a question answering model. The image classification model includes four different models: ViT 1, ViT 2, Swin 1, and Swin 2. The question answering model includes two different models: BERT 1 and BERT 2.

The ViT 1 is used as an example. It can be learned from Table 5 that a precision of an initial sparse network model obtained by performing initial structured sparsity on the ViT 1 based on an overall sparsity ratio of 70% is 72.60%, which is 1.26% lower than a target precision 73.86%. A precision of an optimized network model obtained only by optimizing a sparsity ratio of each network layer in the initial sparse network model is 72.70%. A precision of an optimized network model obtained only by optimizing a scaling ratio of an element scaling operator at each network layer in the initial sparse network model is 73.68%. A precision of an optimized network model obtained by optimizing the sparsity ratio of each network layer and optimizing the scaling ratio of the element scaling operator at each network layer is 73.74%, which is only 0.120% lower than the target precision 73.86%.

The ViT 1 is used as an example. It can be learned from Table 6 that a precision of an initial sparse network model obtained by performing initial structured sparsity on the ViT 1 based on a partitioned sparsity ratio of 2:4 is 73.44%, which is 0.42% lower than a target precision 73.86%. A precision of an optimized network model obtained by optimizing a scaling ratio of an element scaling operator at each network layer in the initial sparse network model is 74.01%, which is 0.150% higher than the target precision 73.86%.

Table 5

| Deep learning network model | Overall sparsity: 70% | Target precision | √ | √ | √ | √ | Comparison between an optimal solution and the target precision |
|---|---|---|---|---|---|---|---|
| | Optimize a sparsity ratio | | × | √ | × | √ | |
| | Optimize a scaling ratio | | × | × | √ | √ | |
| Image classification model | ViT 1 | 73.86% | 72.60% | 72.70% | 73.68% | **73.74%** | -0.120% |
| | ViT 2 | 79.01% | 77.87% | 77.94% | 78.89% | **78.90%** | -0.110% |
| | Swin 1 | 80.72% | 79.96% | 80.01% | 80.25% | **80.26%** | -0.456% |
| | Swin 2 | 84.71% | 84.29% | 84.37% | 84.53% | **84.54%** | -0.174% |
| Question answering model | BERT 1 | 88.71% | **88.72%** | / | / | / | +0.011% |
| | BERT 2 | 91.42% | **91.43%** | / | / | / | +0.010% |

Table 6

| Deep learning network model | Partitioned sparsity: 2:4 | Target precision | √ | √ | Comparison between an optimal solution and the target precision |
| | Optimize a scaling ratio | | × | √ | |
|---|---|---|---|---|---|
| Image classification model | ViT 1 | 73.86% | 73.44% | **74.01%** | +0.150% |
| | ViT 2 | 79.01% | 78.50% | **79.13%** | +0.124% |
| | Swin 1 | 80.72% | 80.42% | **80.56%** | -0.162% |
| | Swin 2 | 84.71% | 84.45% | **84.72%** | +0.012% |
| Question answering model | BERT 1 | 88.71% | **88.59%** | / | -0.118% |
| | BERT 2 | 91.42% | **91.27%** | / | -0.144% |

In this embodiment of this application, initial structured sparsity is performed on each of the plurality of to-be-sparsified network layers included in the deep learning network model, to reduce a quantity of elements in an input matrix of a target operator at each network layer, and resolve a problem that a large amount of time needs to be spent in inference of the target operator at each network layer. Because inference costs of the deep learning network model are related to inference costs of each network layer, computing overheads of the deep learning network model are further reduced by reducing time consumption of the target operator at each network layer.

In addition, when the precision of the initial sparse network model does not reach the target precision, if the target sparsity mode is the overall sparsity mode, the sparsity ratio of each network layer can be further optimized, and/or the scaling ratio of the element scaling operator at each network layer can be further optimized, to further improve the precision of the initial sparse network model. If the target sparsity mode is the partitioned sparsity mode, the scaling ratio of the element scaling operator at each network layer can be further optimized, to further improve the precision of the initial sparse network model. That is, for different target sparsity modes, a corresponding model precision compensation method is used to ensure an inference precision of the model while reducing computing overheads.

It should be noted that the foregoing content is an example in which the computer device performs structured sparsity on the deep learning network model in real time through steps 501 to 503, to obtain the deep learning network model obtained through structured sparsity. The computer device is a terminal or a server. To be specific, the terminal does not interact with the server, and the terminal or the server alone performs structured sparsity on the deep learning network model. Certainly, during actual application, structured sparsity can alternatively be performed on the deep learning network model through interaction between the terminal and the server, to obtain the deep learning network model obtained through structured sparsity. For example, FIG. 6 is a flowchart of another structured sparsity method for a network model according to an embodiment of this application. The method includes the following steps.

**Step 601:** A terminal sends a target sparsity mode, a target sparsity ratio, a deep learning network model, a test sample set, and a target precision to a server.

**Step 602:** The server receives the target sparsity mode, the target sparsity ratio, the deep learning network model, the test sample set, and the target precision that are sent by the terminal; and performs, based on the target sparsity mode and the target sparsity ratio, initial structured sparsity on each of a plurality of to-be-sparsified network layers included in the deep learning network model, to obtain an initial sparse network model.

A quantity of elements in an input matrix of a target operator at each network layer in the initial sparse network model is less than a quantity of elements in an input matrix of a target operator at a corresponding network layer in the deep learning network model, and a dimension of an output matrix of the initial sparse network model is the same as a dimension of an output matrix of the deep learning network model.

Because processes of performing initial structured sparsity on all of the plurality of network layers are the same, any one of the plurality of network layers is used as a target network layer. The following uses the target network layer as an example to describe a process of performing initial structured sparsity on the target network layer. For a process of performing initial structured sparsity on another network layer among the plurality of network layers, refer to the process of performing initial structured sparsity on the target network layer.

In some embodiments, initial structured sparsity is performed on the target network layer according to the following steps (1) and (2).

(1) Add a target sparsity operator to the target network layer based on the target sparsity mode and the target sparsity ratio, where the target sparsity operator is used to prune elements in an input matrix of a target operator at the target network layer.

To be specific, initial structured sparsity is performed on the target network layer by using the target sparsity operator, to reduce a quantity of elements in the input matrix of the target operator at the target network layer. This can resolve a problem that a large amount of time needs to be spent in inference of the target operator at the target network layer, to reduce computing overheads of the deep learning network model.

The target sparsity mode includes an overall sparsity mode and a partitioned sparsity mode. In different cases, manners of adding the target sparsity operator to the target network layer based on the target sparsity mode and the target sparsity ratio are different. Therefore, the following separately describes two cases.

In a first case, the target sparsity mode is the overall sparsity mode, the target sparsity ratio is M%, and M is greater than 0 and less than 100. In this case, a first sparsity operator is added to the target network layer based on the target sparsity mode and the target sparsity ratio, where the first sparsity operator is used to prune elements of a target dimension in the input matrix of the target operator at the target network layer, to retain the first 1-M% of elements with largest values in the target dimension.

In a second case, the target sparsity mode is the partitioned sparsity mode, the target sparsity ratio is N:R, both N and R are integers greater than or equal to 1, and N is less than R. In this case, a second sparsity operator is added to the target network layer based on the target sparsity mode and the target sparsity ratio, where the second sparsity operator is used to prune elements of a target dimension in the input matrix of the target operator at the target network layer, to retain the first N elements with largest values among every R elements of the target dimension.

(2) Add a matrix processing operator to the target network layer, where the matrix processing operator is used to process a mapping matrix of the target network layer based on a pruning result of the target sparsity operator, to enable a dimension of an output matrix of the target network layer to remain the same before and after initial structured sparsity is performed on the target network layer.

The pruning result of the target sparsity operator includes a position matrix, and the matrix processing operator determines, based on the position matrix and a related algorithm, value elements corresponding to each row of elements in a normalized matrix from the mapping matrix of the target network layer. The position matrix indicates a position, in the feature matrix that exists before the pruning, of each element in the pruned feature matrix. The mapping matrix of the target network layer is obtained by mapping to-be-inferred data by the target network layer based on a related algorithm. The normalized matrix is obtained by processing the pruned feature matrix by using the target operator.

To be specific, initial structured sparsity is performed on the target network layer by using the matrix processing operator, to ensure isomorphism between output matrices of the target network layer that exist before and after the initial structured sparsity, so that a target network layer obtained through initial structured sparsity is still applicable to an original network structure.

**Step 603:** The server determines a precision of the initial sparse network model based on the test sample set.

The test sample set includes a plurality of groups of sample data, and each of the plurality of groups of sample data includes a test sample and a sample labeling result. The test sample is input to the initial sparse network model, to obtain a sample test result output by the initial sparse network model. The precision of the initial sparse network model is determined based on the sample test result, the sample labeling result, and a related algorithm.

Step 604: When the precision of the initial sparse network model reaches the target precision, the server determines the initial sparse network model as a deep learning network model obtained through structured sparsity, and sends the deep learning network model obtained through structured sparsity to the terminal.

It should be noted that the content in this embodiment of this application is similar to the content in the embodiment shown in FIG. 5. For specific implementation details, refer to the content in the embodiment shown in FIG. 5.

In this embodiment of this application, initial structured sparsity is performed on each of the plurality of to-be-sparsified network layers included in the deep learning network model, to reduce a quantity of elements in an input matrix of a target operator at each network layer, and resolve a problem that a large amount of time needs to be spent in inference of the target operator at each network layer. Because inference costs of the deep learning network model are related to inference costs of each network layer, computing overheads of the deep learning network model are further reduced by reducing time consumption of the target operator at each network layer.

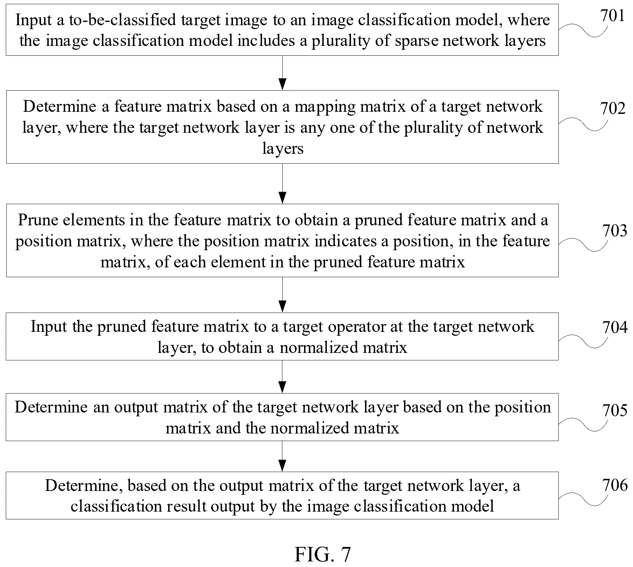

FIG. 7 is a flowchart of an image classification method according to an embodiment of this application. Refer to FIG. 7. The method includes the following steps.

**Step 701:** Input a to-be-classified target image to an image classification model, where the image classification model includes a plurality of sparse network layers.

The image classification model is obtained by a computer device by performing structured sparsity on a deep learning network model in real time. Alternatively, the image classification model is directly obtained by a terminal from a server. In some embodiments, the terminal sends a target sparsity mode, a target sparsity ratio, a deep learning network model, a test sample set, and a target precision to the server. The server receives the target sparsity mode, the target sparsity ratio, the deep learning network model, the test sample set, and the target precision that are sent by the terminal; performs a structured sparsity method on the deep learning network model based on a related algorithm, to obtain a deep learning network model obtained through structured sparsity; and then sends the deep learning network model obtained through structured sparsity to the terminal as the image classification model.

In some other embodiments, the server stores a deep learning network model existing before structured sparsity, and a deep learning network model obtained through structured sparsity. Both the deep learning network model existing before the structured sparsity and the deep learning network model obtained through structured sparsity are applicable to an image classification task scenario. The terminal sends a model request parameter to the server, where the model request parameter indicates a data inference capability of the terminal. The server receives the model request parameter sent by the terminal, determines the image classification model based on the model request parameter, and sends the image classification model to the terminal.

When the model request parameter indicates that the terminal has a strong data inference capability, the server sends the deep learning network model existing before the structured sparsity to the terminal as the image classification model. When the model request parameter indicates that the terminal has a weak data inference capability, the server sends the deep learning network model obtained through structured sparsity to the terminal as the image classification model.

Certainly, during actual application, the terminal can alternatively obtain the image classification model from the server in another manner. This is not limited in this embodiment of this application.

After the target image is input to the image classification model, processing processes for the target image at the plurality of sparse networks in the image classification model are similar. The following uses a target network layer as an example for description.

**Step 702:** Determine a feature matrix based on a mapping matrix of the target network layer, where the target network layer is any one of the plurality of network layers, and the mapping matrix of the target network layer is determined based on the target image.

After receiving the to-be-classified target image, the target network layer maps the target image based on a related algorithm, to obtain the mapping matrix. The mapping matrix includes elements of a plurality of dimensions. The feature matrix is determined based on the mapping matrix.

Optionally, when the target network layer includes a module using a self-attention mechanism, the target network layer maps the target image to three mapping matrices: a query matrix, a key matrix, and a value matrix. The query matrix, the key matrix, and the value matrix each include elements of a plurality of dimensions, and dimensions of the query matrix, the key matrix, and the value matrix are the same. The query matrix indicates pixels in the target image, the key matrix indicates correlations between the pixels, and the value matrix indicates candidate classification results corresponding to the pixels.

In an example, the feature matrix is determined based on the query matrix and the key matrix of the target network layer according to the following formula (4):

$$P = Q \times K^{T} \qquad (4)$$

In the formula (4), $P$ represents the feature matrix, $Q$ represents the query matrix, and $K^{T}$ represents a transpose of the key matrix.

**Step 703:** Prune elements in the feature matrix to obtain a pruned feature matrix and a position matrix, where the position matrix indicates a position, in the feature matrix that exists before the pruning, of each element in the pruned feature matrix.

The target network layer includes a target sparsity operator, and the target sparsity operator has a target sparsity mode and a target sparsity ratio. The elements in the feature matrix are pruned based on the target sparsity mode and the target sparsity ratio by using the target sparsity operator, to obtain the pruned feature matrix and the position matrix.

In an example, the elements in the feature matrix are pruned by using the target sparsity operator according to the following formula (5):

$$P`, \ U = sparse \ (Q \times K^{T}, \dim = -1) \quad (5)$$

In the formula (5), $P'$ represents the pruned feature matrix, $U$ represents the position matrix, *sparse* represents the target sparsity operator, and dim represents a target dimension in which the elements in the feature matrix are pruned.

For example, dim = -1 indicates to prune the elements in the feature matrix row by row, that is, the target dimension is a matrix row dimension. dim = +1 indicates to prune the elements in the feature matrix column by column, that is, the target dimension is a matrix column dimension. Certainly, during actual application, the target dimension in which the elements in the feature matrix are pruned may alternatively be indicated in another manner. This is not limited in this embodiment of this application.

Based on the foregoing descriptions, the target sparsity mode includes an overall sparsity mode and a partitioned sparsity mode. In different cases, manners of pruning the elements in the feature matrix based on the target sparsity mode and the target sparsity ratio by using the target sparsity operator are different. Therefore, the following separately describes two cases.

**In a first case,** the target sparsity mode is the overall sparsity mode, the target sparsity ratio is M%, M is greater than 0 and less than 100, and the target sparsity operator is a first sparsity operator. In this case, the first 1-M% of elements with largest values among elements of a target dimension in the feature matrix are retained by using the first sparsity operator, and a position of each retained element is determined, to obtain the pruned feature matrix and the position matrix.

To be specific, when the target sparsity mode is the overall sparsity mode, values of elements of the target dimension in the feature matrix are directly compared with each other, to retain the first 1-M% of elements with largest values, to obtain the pruned feature matrix.

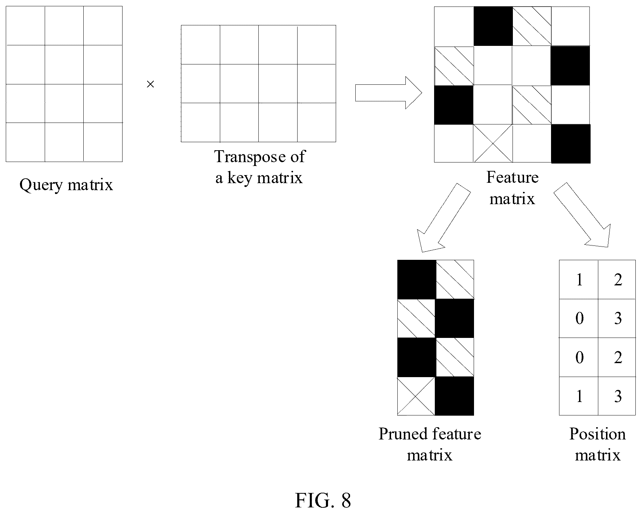

For example, FIG. 8 is a diagram of pruning elements in a feature matrix according to an embodiment of this application. In FIG. 8, both a query matrix and a key matrix are $4 \times 3$ matrices, and a feature matrix determined based on the query matrix and the key matrix is a $4 \times 4$ matrix. To be specific, the feature matrix includes four rows of elements, each row includes four elements, and position sequence numbers corresponding to four elements in a same row are 0, 1, 2, and 3. When the target dimension is the matrix row dimension and the target sparsity ratio is 50%, because values of two elements with position sequence numbers of 1 and 2 among four elements included in the 1st row are the largest, values of two elements with position sequence numbers of 0 and 3 among four elements included in the 2nd row are the largest, and values of two elements with position sequence numbers of 0 and 2 among four elements included in the 3rd row are the largest, and values of two elements with position sequence numbers of 1 and 3 among four elements included in the 4th row are the largest, the first two elements with largest values among four elements in a same row in the feature matrix are retained, to obtain a pruned feature matrix shown in FIG. 8. The pruned feature matrix includes four rows of elements, and each row includes two elements. In addition, a position of each retained element is determined, to obtain a position matrix.

**In a second case,** the target sparsity mode is the partitioned sparsity mode, the target sparsity ratio is N:R, both N and R are integers greater than or equal to 1, N is less than R, and the target sparsity operator is a second sparsity operator. In this case, the first N elements with largest values among every R elements of a target dimension in the feature matrix are retained by using the second sparsity operator, and a position of each retained element is determined, to obtain the pruned feature matrix and the position matrix.

To be specific, when the target sparsity mode is the partitioned sparsity mode, elements of the target dimension in the feature matrix are first divided into a plurality of areas, and each of the plurality of areas includes R adjacent elements. Then, for each of the plurality of areas, values of R elements included in the area are compared with each other, to retain the first N elements with largest values in the area, to obtain the pruned feature matrix.

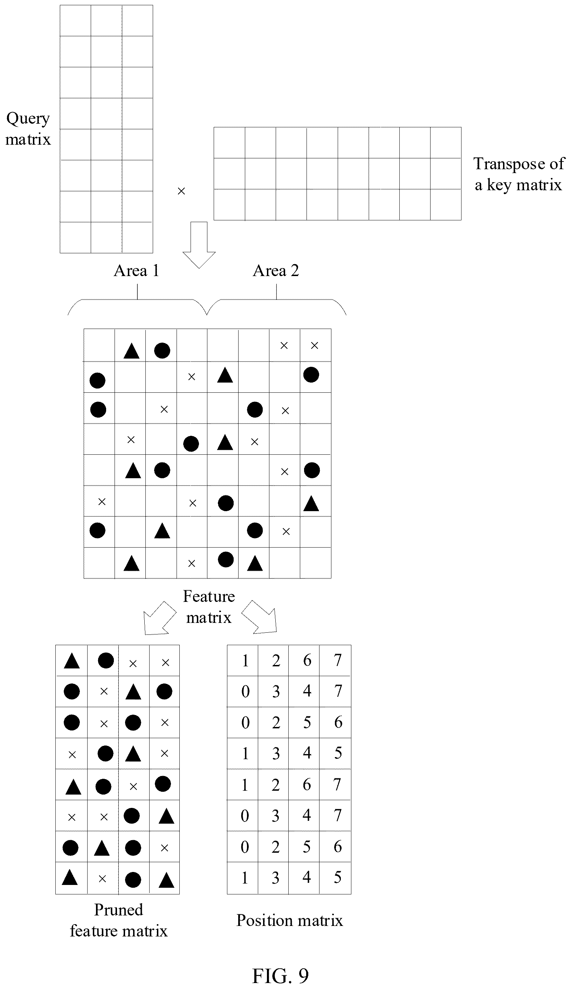

For example, FIG. 9 is another diagram of pruning elements in a feature matrix according to an embodiment of this application. In FIG. 9, both a query matrix and a key matrix are $8 \times 3$ matrices, and a feature matrix determined based on the query matrix and the key matrix is an $8 \times 8$ matrix. To be specific, the feature matrix includes eight rows of elements, each row includes eight elements, and position sequence numbers corresponding to eight elements in a same row are 0, 1, 2, 3, 4, 5, 6, and 7. When the target dimension is the matrix row dimension and the target sparsity ratio is 2:4, eight elements in a same row in the feature matrix are first divided into two areas: an area 1 and an area 2, where each row in the area 1 and the area 2 includes four adjacent elements. Then the first two elements with largest values among four elements in a same row in the area 1 and the first two elements with largest values among four elements in a same row in the area 2 are separately retained, to obtain a pruned feature matrix. The pruned feature matrix includes eight rows of elements, and each row includes four elements. In addition, a position of each retained element is determined, to obtain the pruned feature matrix and a position matrix.

**Step 704:** Input the pruned feature matrix to a target operator at the target network layer, to obtain a normalized matrix.

When the target network layer includes a module using a self-attention mechanism, the target operator is a softmax operator. In this case, the normalized matrix is obtained according to the following formula (6):

$$S = soft \max (P`) \qquad (6)$$

In the formula (6), $S$ represents the normalized matrix, $soft$ max represents the softmax operator, and $P`$ represents the pruned feature matrix.

Optionally, the target network layer further includes an element scaling operator. After the pruned feature matrix is input to the target operator at the target network layer to obtain the normalized matrix, elements in the normalized matrix can be further scaled by using the element scaling operator.

In an example, the elements in the normalized matrix are scaled according to the following formula (7):

$$S` = \beta \times soft \max (P`) \qquad (7)$$

In the formula (7), $S'$ represents a scaled normalized matrix, and $\beta$ represents the element scaling operator.

**Step 705:** Determine an output matrix of the target network layer based on the position matrix and the normalized matrix.

In some embodiments, when the target network layer includes a module using a self-attention mechanism and the target operator is a softmax operator, the output matrix of the target network layer is determined according to the following steps (1) and (2).

(1) Determine, based on the position matrix, value elements corresponding to each row of elements in the normalized matrix from the value matrix of the target network layer.

The value matrix of the target network layer is obtained by the target network layer by mapping the target image based on a related algorithm.

Based on the foregoing descriptions, the normalized matrix is obtained by inputting the pruned feature matrix to the target operator at the target network layer. Therefore, actually, a quantity of elements of the target dimension in the normalized matrix is also reduced. To ensure that a dimension of the output matrix of the target network layer is the same as dimensions of the query matrix and the key matrix, the value elements corresponding to each row of elements in the normalized matrix further need to be determined. For example, the value elements corresponding to each row of elements in the normalized matrix are determined from the value matrix of the target network layer based on the position matrix by using a bit field extraction method. For each row of elements in the normalized matrix, elements at corresponding positions are selected from the value matrix of the target network layer based on positions indicated by elements in a same row in the position matrix, to obtain the value elements corresponding to each row of elements in the normalized matrix.

It is assumed that the pruned feature matrix and the position matrix that are obtained by pruning the elements in the feature matrix are shown in FIG. 8. The pruned feature matrix includes four rows of elements, and each row includes two elements. In this case, the normalized matrix obtained by inputting the pruned feature matrix to the target operator of the target network layer also includes four rows of elements, and each row includes two elements. The 1st row of elements in the normalized matrix is used as an example. Elements that are also located in the 1st row in the position matrix are 1 and 2. Therefore, two rows of elements with row sequence numbers of 1 and 2 are selected from the value matrix of the target network layer, and the two rows of elements are used as value elements corresponding to the 1st row of elements in the normalized matrix.

Certainly, during actual application, the value elements corresponding to each row of elements in the normalized matrix can alternatively be determined from the value matrix of the target network layer based on the position matrix in another manner. This is not limited in this embodiment of this application.

(2) Determine the output matrix of the target network layer based on the normalized matrix and the value elements corresponding to each row of elements in the normalized matrix.

In an example, the output matrix of the target network layer is determined according to the following formula (8):

$$Z = S \times V`$$
$$= \left\{ Z_{[a,\ b]} a \in \left\{0,1,2...\right\},\quad b \in \left\{0,1,2...\right\} \right\} \tag{8}$$

In the formula (8), $Z$ represents the output matrix of the target network layer, $S$ represents the normalized matrix, $V'$ represents the value elements corresponding to each row of elements in the normalized matrix, and $Z_{[a,\ b]}$ represents a value of each element included in the output matrix of the target network layer.

Optionally, based on the foregoing descriptions, the target network layer further includes the element scaling operator, and after the normalized matrix is obtained, the elements in the normalized matrix can be further scaled by using the element scaling operator, to obtain the scaled normalized matrix. Therefore, the foregoing descriptions of determining the output matrix of the target network layer directly based on the normalized matrix and the value elements corresponding to each row of elements in the normalized matrix is merely an example. In some other embodiments, the output matrix of the target network layer can alternatively be determined based on the scaled normalized matrix and the value elements corresponding to each row of elements in the normalized matrix, to further improve accuracy of the output matrix of the target network layer.

**Step 706:** Determine, based on the output matrix of the target network layer, a classification result output by the image classification model.

When the target network layer is the last one of the plurality of network layers, the output matrix of the target network layer is processed based on a related algorithm, to obtain the classification result output by the image classification model.

When the target network layer is not the last one of the plurality of network layers, the output matrix of the target network layer is input to a next network layer adjacent to the target network layer. The next network layer receives the output matrix of the target network layer, and repeatedly performs steps 702 to 705 as a new target network layer, until the last one of the plurality of network layers is reached.

In this embodiment of this application, the to-be-classified target image is input to the image classification model, and the to-be-classified target image is processed through the plurality of sparse network layers included in the image classification model. The elements in the feature matrix are pruned through the target network layer, to reduce time spent in performing inference by the target operator of the target network layer to obtain the normalized matrix. Because inference costs of the image classification model are related to inference costs of the target operator, computing overheads of the image classification model are further reduced by reducing time consumption of the target operator, so that the image classification model can more quickly output the classification result.

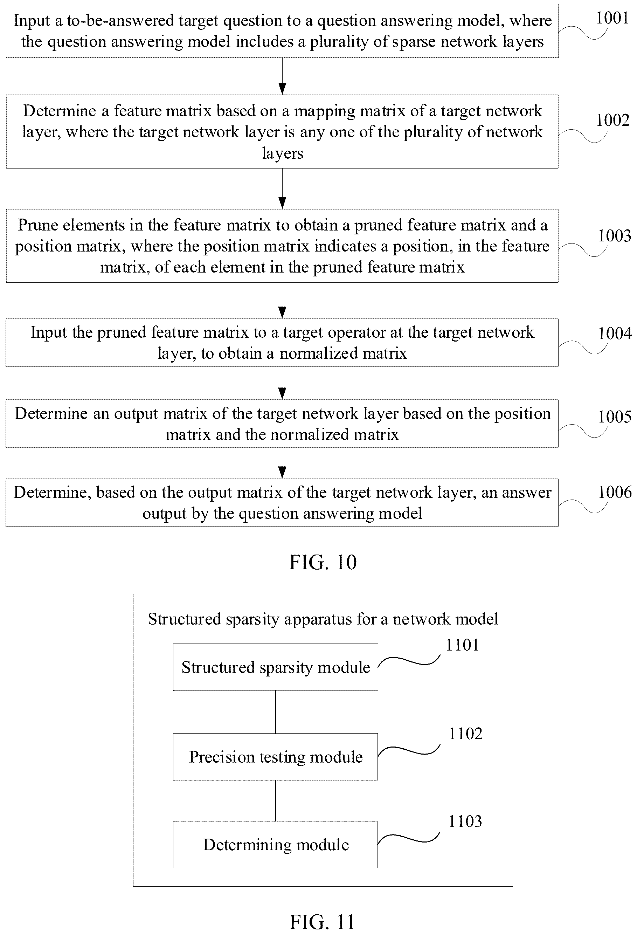

FIG. 10 is a flowchart of a question answering method according to an embodiment of this application. Refer to FIG. 10. The method includes the following steps.

**Step 1001:** Input a to-be-answered target question to a question answering model, where the question answering model includes a plurality of sparse network layers.

The question answering model is obtained by a computer device by performing structured sparsity on a deep learning network model in real time. Alternatively, the question answering model is directly obtained by a terminal from a server. For a detailed implementation process, refer to related descriptions of step 701. Details are not described herein again.

**Step 1002:** Determine a feature matrix based on a mapping matrix of the target network layer, where the target network layer is any one of the plurality of network layers, and the mapping matrix of the target network layer is determined based on the target question.

After receiving the to-be-answered target question, the target network layer maps the target question based on a related algorithm, to obtain the mapping matrix. The mapping matrix includes elements of a plurality of dimensions. The feature matrix is determined based on the mapping matrix.

Optionally, when the target network layer includes a module using a self-attention mechanism, the target network layer maps the target question to three mapping matrices: a query matrix, a key matrix, and a value matrix. The query matrix, the key matrix, and the value matrix each include elements of a plurality of dimensions, and dimensions of the query matrix, the key matrix, and the value matrix are the same. The query matrix indicates phrases in the target question, the key matrix indicates correlations between the phrases, and the value matrix indicates candidate answers corresponding to the phrases.

**Step 1003:** Prune elements in the feature matrix to obtain a pruned feature matrix and a position matrix, where the position matrix indicates a position, in the feature matrix that exists before the pruning, of each element in the pruned feature matrix.

The target network layer includes a target sparsity operator, and the target sparsity operator has a target sparsity mode and a target sparsity ratio. The elements in the feature matrix are pruned based on the target sparsity mode and the target sparsity ratio by using the target sparsity operator, to obtain the pruned feature matrix and the position matrix.

Based on the foregoing descriptions, the target sparsity mode includes an overall sparsity mode and a partitioned sparsity mode. In different cases, manners of pruning the elements in the feature matrix based on the target sparsity mode and the target sparsity ratio by using the target sparsity operator are different. Therefore, the following separately describes two cases.

**In a first case,** the target sparsity mode is the overall sparsity mode, the target sparsity ratio is M%, M is greater than 0 and less than 100, and the target sparsity operator is a first sparsity operator. In this case, the first 1-M% of elements with largest values among elements of a target dimension in the feature matrix are retained by using the first sparsity operator, and a position of each retained element is determined, to obtain the pruned feature matrix and the position matrix.

To be specific, when the target sparsity mode is the overall sparsity mode, values of elements of the target dimension in the feature matrix are directly compared with each other, to retain the first 1-M% of elements with largest values, to obtain the pruned feature matrix.

**In a second case,** the target sparsity mode is the partitioned sparsity mode, the target sparsity ratio is N:R, both N and R are integers greater than or equal to 1, N is less than R, and the target sparsity operator is a second sparsity operator. In this case, the first N elements with largest values among every R elements of a target dimension in the feature matrix are retained by using the second sparsity operator, and a position of each retained element is determined, to obtain the pruned feature matrix and the position matrix.

To be specific, when the target sparsity mode is the partitioned sparsity mode, elements of the target dimension in the feature matrix are first divided into a plurality of areas, and each of the plurality of areas includes R adjacent elements. Then, for each of the plurality of areas, values of R elements included in the area are compared with each other, to retain the first N elements with largest values in the area, to obtain the pruned feature matrix.

**Step 1004:** Input the pruned feature matrix to a target operator at the target network layer, to obtain a normalized matrix.

When the target network layer includes a module using a self-attention mechanism, the target operator is a softmax operator. In this case, the pruned feature matrix is input to the softmax operator of the target network layer, to obtain the normalized matrix. For a detailed implementation process, refer to related descriptions of step 704. Details are not described herein again.

Optionally, the target network layer further includes an element scaling operator. After the pruned feature matrix is input to the target operator at the target network layer to obtain the normalized matrix, elements in the normalized matrix can be further scaled by using the element scaling operator.

**Step 1005:** Determine an output matrix of the target network layer based on the position matrix and the normalized matrix.

Value elements corresponding to each row of elements in the normalized matrix are determined from the value matrix of the target network layer based on the position matrix. The output matrix of the target network layer is determined based on the normalized matrix and the value elements corresponding to each row of elements in the normalized matrix. For a detailed implementation process, refer to related descriptions of step 705. Details are not described herein again.

Optionally, based on the foregoing descriptions, the target network layer further includes the element scaling operator, and after the normalized matrix is obtained, the elements in the normalized matrix can be further scaled by using the element scaling operator, to obtain the scaled normalized matrix. Therefore, the foregoing descriptions of determining the output matrix of the target network layer directly based on the normalized matrix and the value elements corresponding to each row of elements in the normalized matrix is merely an example. In some other embodiments, the output matrix of the target network layer can alternatively be determined based on the scaled normalized matrix and the value elements corresponding to each row of elements in the normalized matrix, to further improve accuracy of the output matrix of the target network layer.

**Step 1006:** Determine, based on the output matrix of the target network layer, an answer output by the question answering model.

When the target network layer is the last one of the plurality of network layers, the output matrix of the target network layer is processed based on a related algorithm, to obtain the answer output by the question answering model.

When the target network layer is not the last one of the plurality of network layers, the output matrix of the target network layer is input to a next network layer adjacent to the target network layer. The next network layer receives the output matrix of the target network layer, and repeatedly performs steps 1002 to 1005 as a new target network layer, until the last one of the plurality of network layers is reached.

In this embodiment of this application, the to-be-answered target question is input to the question answering model, and the to-be-answered target question is processed through the plurality of sparse network layers included in the question answering model. The elements in the feature matrix are pruned through the target network layer, to reduce time spent in performing inference by the target operator of the target network layer to obtain the normalized matrix. Because inference costs of the question answering model are related to inference costs of the target operator, computing overheads of the question answering model are further reduced by reducing time consumption of the target operator, so that the question answering model can more quickly output the answer.

It should be noted that, when the deep learning network model includes a plurality of sparse network layers, performing image classification or question answering by using the deep learning network model is merely an example. During actual application, the deep learning network model including a plurality of sparse network layers can alternatively be applied to another task scenario. A process of performing data inference by the deep learning network model in another task scenario is similar to the process of performing image classification or question answering. Details are not described herein again.

FIG. 11 is a diagram of a structure of a structured sparsity apparatus for a network model according to an embodiment of this application. The structured sparsity apparatus for a network model may be implemented as a part or all of a computer device by using software, hardware, or a combination thereof. Refer to FIG. 11. The apparatus includes a structured sparsity module 1101, a precision testing module 1102, and a determining module 1103.

The structured sparsity module 1101 is configured to perform, based on a target sparsity mode and a target sparsity ratio, initial structured sparsity on each of a plurality of to-be-sparsified network layers included in a deep learning network model, to obtain an initial sparse network model. For a detailed implementation process, refer to corresponding content in the foregoing embodiments. Details are not described herein again.

A quantity of elements in an input matrix of a target operator at each network layer in the initial sparse network model is less than a quantity of elements in an input matrix of a target operator at a corresponding network layer in the deep learning network model, and a dimension of an output matrix of the initial sparse network model is the same as a dimension of an output matrix of the deep learning network model.

The precision testing module 1102 is configured to determine a precision of the initial sparse network model based on a test sample set. For a detailed implementation process, refer to corresponding content in the foregoing embodiments. Details are not described herein again.

The determining module 1103 is configured to: when the precision of the initial sparse network model reaches a target precision, determine the initial sparse network model as a deep learning network model obtained through structured sparsity. For a detailed implementation process, refer to corresponding content in the foregoing embodiments. Details are not described herein again.

Optionally, the structured sparsity module 1101 includes:

a first adding unit, configured to add a target sparsity operator to a target network layer based on the target sparsity mode and the target sparsity ratio, where the target sparsity operator is used to prune elements in an input matrix of a target operator at the target network layer, and the target network layer is any one of the plurality of network layers; and

a second adding unit, configured to add a matrix processing operator to the target network layer, where the matrix processing operator is used to process a mapping matrix of the target network layer based on a pruning result of the target sparsity operator, to enable a dimension of an output matrix of the target network layer to remain the same before and after initial structured sparsity is performed on the target network layer.

Optionally, the target sparsity mode is an overall sparsity mode, the target sparsity ratio is M%, and M is greater than 0 and less than 100.

The first adding unit is specifically configured to:

add a first sparsity operator to the target network layer based on the target sparsity mode and the target sparsity ratio, where the first sparsity operator is used to prune elements of a target dimension in the input matrix of the target operator at the target network layer, to retain the first 1-M% of elements with largest values in the target dimension.

Optionally, the target sparsity mode is a partitioned sparsity mode, the target sparsity ratio is N:R, both N and R are integers greater than or equal to 1, and N is less than R.

The first adding unit is specifically configured to:

add a second sparsity operator to the target network layer based on the target sparsity mode and the target sparsity ratio, where the second sparsity operator is used to prune elements of a target dimension in the input matrix of the target operator at the target network layer, to retain the first N elements with largest values among every R elements of the target dimension.

Optionally, the apparatus further includes:

a first sparsity parameter optimization module, configured to: when the precision of the initial sparse network model does not reach the target precision, optimize a sparsity ratio of each network layer in the initial sparse network model based on the target precision, the target sparsity ratio, and the test sample set, to obtain a deep learning network model that is obtained through structured sparsity.

Optionally, the first sparsity parameter optimization module includes:

a first determining unit, configured to determine sensitivity of each network layer in the initial sparse network model based on the target precision and the test sample set;

a second determining unit, configured to determine an optimized sparsity ratio of each network layer based on the sensitivity of each network layer, a quantity of the plurality of network layers, a total quantity of elements of the target dimension, and the target sparsity ratio;

a first optimization unit, configured to optimize the sparsity ratio of each network layer in the initial sparse network model based on the optimized sparsity ratio of each network layer, to obtain an optimized network model;

a third determining unit, configured to determine a precision of the optimized network model based on the test sample set; and

a fourth determining unit, configured to: when the precision of the optimized network model reaches the target precision, determine the optimized network model as the deep learning network model obtained through structured sparsity.

Optionally, the first determining unit is specifically configured to:

determine a precision of each network layer in the initial sparse network model based on the test sample set; and

determine the sensitivity of each network layer based on the target precision and the precision of each network layer.

Optionally, the first sparsity parameter optimization module further includes:

an adding unit, configured to: when the precision of the optimized network model does not reach the target precision, add an element scaling operator to each network layer in the optimized network model, where the element scaling operator is used to scale elements in an output matrix of a target operator at a network layer at which the element scaling operator is located; and

a second optimization unit, configured to optimize a scaling ratio of the element scaling operator at each network layer in the optimized network model based on an initial ratio range and a plurality of granularities, to obtain the deep learning network model that is obtained through structured sparsity.

Optionally, the apparatus further includes:

an adding module, configured to: when the precision of the initial sparse network model does not reach the target precision, add an element scaling operator to each network layer in the initial sparse network model, where the element scaling operator is used to scale elements in an output matrix of a target operator at a network layer at which the element scaling operator is located; and

a second sparsity parameter optimization module, configured to optimize a scaling ratio of the element scaling operator at each network layer in the initial sparse network model based on an initial ratio range and a plurality of granularities, to obtain a deep learning network model that is obtained through structured sparsity.

Optionally, the second sparsity parameter optimization module includes:

a search unit, configured to: assume that i=1, use the initial ratio range as an $i^{th}$ ratio range, select an $i^{th}$ granularity from the plurality of granularities in descending order, and search, based on the $i^{th}$ granularity, the $i^{th}$ ratio range for a reference scaling ratio corresponding to each network layer, where the reference scaling ratio is a scaling ratio used when a corresponding network layer has a maximum precision;

a first determining unit, configured to: when i is equal to a total quantity of the plurality of granularities, determine, as the deep learning network model obtained through structured sparsity, a network model in which the scaling ratio of the element scaling operator at each network layer is the reference scaling ratio; and

a second determining unit, configured to: when i is less than a total quantity of the plurality of granularities, assume that i=i+1, determine, based on an $(i-1)^{th}$ granularity and an $i^{th}$ granularity among the plurality of granularities in descending order and the reference scaling ratio corresponding to each network layer, an $i^{th}$ ratio range corresponding to each network layer, and return to the step of searching, based on the $i^{th}$ granularity, the $i^{th}$ ratio range for a reference scaling ratio corresponding to each network layer.

Optionally, the second determining unit is specifically configured to:

determine a difference between the $(i-1)^{th}$ granularity and the $i^{th}$ granularity; and

subtract the difference from a reference scaling ratio corresponding to the target network layer, to obtain a lower limit of an $i^{th}$ ratio range corresponding to the target network layer, and add the difference to the reference scaling ratio corresponding to the target network layer, to obtain an upper limit of the $i^{th}$ ratio range corresponding to the target network layer, where the target network layer is any one of the plurality of network layers.

Optionally, the plurality of network layers each include a module using a self-attention mechanism, and the target operator is a softmax operator.

Optionally, the deep learning network model is applicable to any one of the following types of task scenarios: semantic segmentation, image classification, object detection, image generation, language modeling, question answering, machine translation, and sentiment analysis.

Optionally, when the deep learning network model is applicable to the image classification task scenario, the test sample set includes a test image and a classification labeling result; or

when the deep learning network model is applicable to the question answering task scenario, the test sample set includes a test question in a text format and an answer labeling result.

In this embodiment of this application, initial structured sparsity is performed on each of the plurality of to-be-sparsified network layers included in the deep learning network model, to reduce a quantity of elements in an input matrix of a target operator at each network layer, and resolve a problem that a large amount of time needs to be spent in inference of the target operator at each network layer. Because inference costs of the deep learning network model are related to inference costs of each network layer, computing overheads of the deep learning network model are further reduced by reducing time consumption of the target operator at each network layer.

In addition, when the precision of the initial sparse network model does not reach the target precision, if the target sparsity mode is the overall sparsity mode, the sparsity ratio of each network layer can be further optimized, and/or the scaling ratio of the element scaling operator at each network layer can be further optimized, to further improve the precision of the initial sparse network model. If the target sparsity mode is the partitioned sparsity mode, the scaling ratio of the element scaling operator at each network layer can be further optimized, to further improve the precision of the initial sparse network model. That is, for different target sparsity modes, a corresponding model precision compensation method is used to ensure an inference precision of the model while reducing computing overheads.

It should be noted that, when the structured sparsity apparatus for a network model provided in the foregoing embodiment performs structured sparsity on a network model, division into the foregoing functional modules is merely used as an example for description. During actual application, the foregoing functions may be allocated to different functional modules for implementation according to a requirement. To be specific, an internal structure of the apparatus may be divided into different functional modules to implement all or some of the functions described above. In addition, the structured sparsity apparatus for a network model provided in the foregoing embodiment and the embodiment of the structured sparsity method for a network model belong to a same concept. For details about a specific implementation process of the apparatus, refer to the method embodiment. Details are not described herein again.

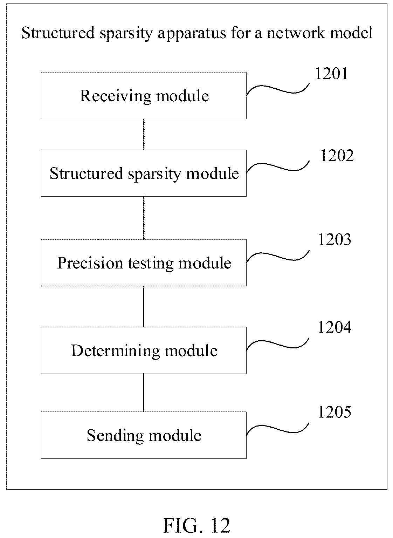

FIG. 12 is a diagram of a structure of another structured sparsity apparatus for a network model according to an embodiment of this application. The structured sparsity apparatus for a network model may be implemented as a part or all of a server by using software, hardware, or a combination thereof. Refer to FIG. 12. The apparatus includes a receiving module 1201, a structured sparsity module 1202, a precision testing module 1203, a determining module 1204, and a sending module 1205.

The receiving module 1201 is configured to receive a target sparsity mode, a target sparsity ratio, a deep learning network model, a test sample set, and a target precision that are sent by a terminal. For a detailed implementation process, refer to corresponding content in the foregoing embodiments. Details are not described herein again.

The structured sparsity module 1202 is configured to perform, based on the target sparsity mode and the target sparsity ratio, initial structured sparsity on each of a plurality of to-be-sparsified network layers included in the deep learning network model, to obtain an initial sparse network model. For a detailed implementation process, refer to corresponding content in the foregoing embodiments. Details are not described herein again.

A quantity of elements in an input matrix of a target operator at each network layer in the initial sparse network model is less than a quantity of elements in an input matrix of a target operator at a corresponding network layer in the deep learning network model, and a dimension of an output matrix of the initial sparse network model is the same as a dimension of an output matrix of the deep learning network model.

The precision testing module 1203 is configured to determine a precision of the initial sparse network model based on the test sample set. For a detailed implementation process, refer to corresponding content in the foregoing embodiments. Details are not described herein again.

The determining module 1204 is configured to: when the precision of the initial sparse network model reaches the target precision, determine the initial sparse network model as a deep learning network model obtained through structured sparsity. For a detailed implementation process, refer to corresponding content in the foregoing embodiments. Details are not described herein again.

The sending module 1205 is configured to send the deep learning network model obtained through structured sparsity to the terminal. For a detailed implementation process, refer to corresponding content in the foregoing embodiments. Details are not described herein again.

In this embodiment of this application, initial structured sparsity is performed on each of the plurality of to-be-sparsified network layers included in the deep learning network model, to reduce a quantity of elements in an input matrix of a target operator at each network layer, and resolve a problem that a large amount of time needs to be spent in inference of the target operator at each network layer. Because inference costs of the deep learning network model are related to inference costs of each network layer, computing overheads of the deep learning network model are further reduced by reducing time consumption of the target operator at each network layer.

It should be noted that, when the structured sparsity apparatus for a network model provided in the foregoing embodiment performs structured sparsity on a network model, division into the foregoing functional modules is merely used as an example for description. During actual application, the foregoing functions may be allocated to different functional modules for implementation according to a requirement. To be specific, an internal structure of the apparatus may be divided into different functional modules to implement all or some of the functions described above. In addition, the structured sparsity apparatus for a network model provided in the foregoing embodiment and the embodiment of the structured sparsity method for a network model belong to a same concept. For details about a specific implementation process of the apparatus, refer to the method embodiment. Details are not described herein again.

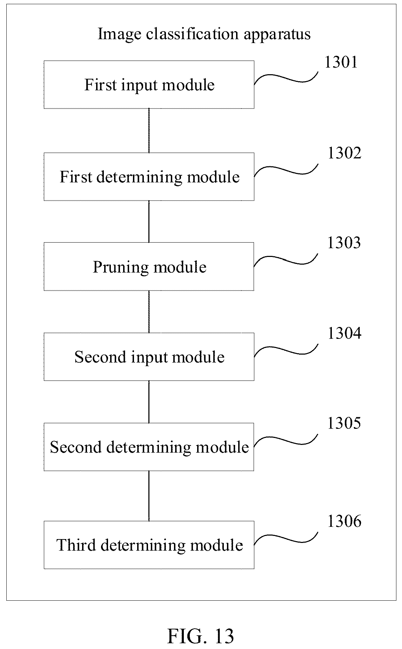

FIG. 13 is a diagram of a structure of an image classification apparatus according to an embodiment of this application. The image classification apparatus may be implemented as a part or all of a computer device by using software, hardware, or a combination thereof. Refer to FIG. 13. The apparatus includes a first input module 1301, a first determining module 1302, a pruning module 1303, a second input module 1304, a second determining module 1305, and a third determining module 1306.

The first input module 1301 is configured to input a to-be-classified target image to an image classification model, where the image classification model includes a plurality of sparse network layers. For a detailed implementation process, refer to corresponding content in the foregoing embodiments. Details are not described herein again.

The first determining module 1302 is configured to determine a feature matrix based on a mapping matrix of a target network layer, where the target network layer is any one of the plurality of network layers. For a detailed implementation process, refer to corresponding content in the foregoing embodiments. Details are not described herein again.

The pruning module 1303 is configured to prune elements in the feature matrix to obtain a pruned feature matrix and a position matrix, where the position matrix indicates a position, in the feature matrix that exists before the pruning, of each element in the pruned feature matrix. For a detailed implementation process, refer to corresponding content in the foregoing embodiments. Details are not described herein again.

The second input module 1304 is configured to input the pruned feature matrix to a target operator at the target network layer, to obtain a normalized matrix. For a detailed implementation process, refer to corresponding content in the foregoing embodiments. Details are not described herein again.

The second determining module 1305 is configured to determine an output matrix of the target network layer based on the position matrix and the normalized matrix. For a detailed implementation process, refer to corresponding content in the foregoing embodiments. Details are not described herein again.

The third determining module 1306 is configured to determine, based on the output matrix of the target network layer, a classification result output by the image classification model. For a detailed implementation process, refer to corresponding content in the foregoing embodiments. Details are not described herein again.

Optionally, the target network layer includes a target sparsity operator, and the target sparsity operator has a target sparsity mode and a target sparsity ratio.

The pruning module 1303 is specifically configured to:
prune the elements in the feature matrix based on the target sparsity mode and the target sparsity ratio by using the target sparsity operator, to obtain the pruned feature matrix and the position matrix.

Optionally, the target sparsity mode is an overall sparsity mode, the target sparsity ratio is M%, M is greater than 0 and less than 100, and the target sparsity operator is a first sparsity operator.

The pruning module 1303 is specifically configured to:
retain, by using the first sparsity operator, the first 1-M% of elements with largest values among elements of a target dimension in the feature matrix, and determine a position of each retained element, to obtain the pruned feature matrix and the position matrix.

Optionally, the target sparsity mode is a partitioned sparsity mode, the target sparsity ratio is N:R, both N and R are integers greater than or equal to 1, N is less than R, and the target sparsity operator is a second sparsity operator.

The pruning module 1303 is specifically configured to:
retain, by using the second sparsity operator, the first N elements with largest values among every R elements of a target dimension in the feature matrix, and determine a position of each retained R element, to obtain the pruned feature matrix and the position matrix.

Optionally, the target network layer further includes an element scaling operator, and the apparatus further includes:

a scaling module, configured to scale elements in the normalized matrix by using the element scaling operator; and
the second determining module 1305 is specifically configured to:
determine the output matrix of the target network layer based on the position matrix and a scaled normalized matrix.

In this embodiment of this application, the to-be-classified target image is input to the image classification model, and the to-be-classified target image is processed through the plurality of sparse network layers included in the image classification model. The elements in the feature matrix are pruned through the target network layer, to reduce time spent in performing inference by the target operator of the target network layer to obtain the normalized matrix. Because inference costs of the image classification model are related to inference costs of the target operator, computing overheads of the image classification model are further reduced by reducing time consumption of the target operator, so that the image classification model can more quickly output the classification result.

It should be noted that, when the image classification apparatus provided in the foregoing embodiment performs image classification, division into the foregoing functional modules is merely used as an example for description. During actual application, the foregoing functions may be allocated to different functional modules for implementation according to a requirement. To be specific, an internal structure of the apparatus may be divided into different functional modules to implement all or some of the functions described above. In addition, the image classification apparatus provided in the foregoing embodiment and the embodiment of the image classification method belong to a same concept. For details about a specific implementation process of the apparatus, refer to the method embodiment. Details are not described herein again.

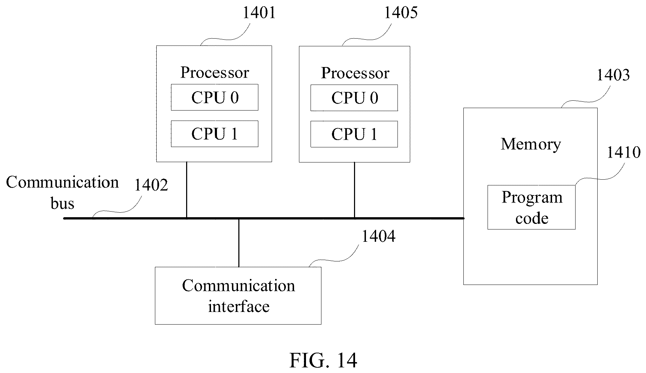

FIG. 14 is a diagram of a structure of a computer device according to an embodiment of this application. The computer device may be the terminal mentioned above, or may be the server mentioned above. The computer device includes at least one processor 1401, a communication bus 1402, a memory 1403, and at least one communication interface 1404.

The processor 1401 may be a general-purpose central processing unit (central processing unit, CPU), a network processor (network processor, NP), or a microprocessor, or may be one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

The communication bus 1402 is configured to transmit information between the foregoing components. The communication bus 1402 may be classified into an address bus, a data bus, a control bus, and the like. For ease of representation, only one bold line is used in the figure for representation, but this does not mean that there is only one bus or only one type of bus.

The memory 1403 may be a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be configured to carry or store expected program code in a form of instructions or data structures and that can be accessed by a computer, but is not limited thereto. The memory 1403 may exist independently, and is connected to the processor 1401 through the communication bus 1402. Alternatively, the memory 1403 may be integrated with the processor 1401.

The communication interface 1404 is configured to communicate with another device or a communication network through any apparatus similar to a transceiver. The communication interface 1404 includes a wired communication interface, or may include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like.

During specific implementation, in an embodiment, the processor 1401 may include one or more CPUs, for example, a CPU 0 and a CPU 1 shown in FIG. 14.

During specific implementation, in an embodiment, the computer device may include a plurality of processors, for example, the processor 1401 and a processor 1405 shown in FIG. 14. Each of the processors may be a single-core processor or a multi-core processor. The processor herein may be one or more devices, circuits, and/or processing cores for processing data (for example, computer program instructions).

During specific implementation, in an embodiment, the computer device may further include an output device 1406 and an input device 1407 (not shown in the figure). The output device 1406 communicates with the processor 1401, and may display information in a plurality of manners. For example, the output device 1406 may be a liquid crystal display (liquid crystal display, LCD), a light emitting diode (light emitting diode, LED) display device, a cathode ray tube (cathode ray tube, CRT) display device, or a projector (projector). The input device 1407 communicates with the processor 1401, and may receive an input of a user in a plurality of manners. For example, the input device 1407 may be a mouse, a keyboard, a touchscreen device, or a sensor device.

In some embodiments, the memory 1403 is configured to store program code 1410 for performing the solutions of this application, and the processor 1401 may execute the program code 1410 stored in the memory 1403. The program code 1410 may include one or more software modules. The computer device may implement, by using the processor 1401 and the program code 1410 in the memory 1403, the structured sparsity method for a network model provided in the embodiment of FIG. 5.

All or some of the foregoing embodiments may be implemented by software, hardware, firmware, or any combination thereof. When the embodiments are implemented by software, all or some of the embodiments may be implemented in a form of a computer program product. The computer program product includes one or more computer instructions. When the computer instructions are loaded and executed on a computer, all or some of the processes or the functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive, SSD)), or the like. It should be noted that the computer-readable storage medium mentioned in embodiments of this application may be a non-volatile storage medium, namely, a non-transitory storage medium.

To be specific, an embodiment of this application further provides a computer-readable storage medium, where the computer-readable storage medium stores instructions, and when the instructions are run on a computer, the computer is enabled to perform the steps of the structured sparsity mode for a network model, the image classification method, or the question answering method.

An embodiment of this application further provides a computer program product including instructions, where when the instructions are run on a computer, the computer is enabled to perform the steps of the structured sparsity method for a network model, the image classification method, or the question answering method. In other words, a computer program is provided, where when the computer program is run on a computer, the computer is enabled to perform the steps of the structured sparsity method for a network model, the image classification method, or the question answering method.

It should be understood that "a plurality of" mentioned in this specification indicates two or more. In descriptions of embodiments of this application, "/" indicates or, unless otherwise specified. For example, A/B may indicate A or B. In this specification, "and/or" describes only an association relationship between associated objects, and indicates that three relationships may exist. For example, A and/or B may indicate the following three cases: Only A exists, both A and B exist, and only B exists. In addition, to clearly describe the technical solutions in embodiments of this application, the terms "first", "second", and the like are used in embodiments of this application to distinguish between same items or similar items that provide basically same functions or purposes. A person skilled in the art can understand that the terms "first", "second", and the like do not limit a quantity or an execution sequence, and the terms "first", "second", and the like do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and collection, use, and processing of related data need to conform to related laws, regulations, and standards of related countries and regions. For example, all of the target sparsity mode, the target sparsity ratio, the deep learning network model, the test sample set, and the target precision in embodiments of this application are obtained under sufficient authorization.

The foregoing descriptions are merely embodiments provided in this application, but are not intended to limit this application. Any modification, equivalent replacement, or improvement made without departing from the spirit and principle of this application shall fall within the protection scope of this application.

## Claims

1. A structured sparsity method for a network model, wherein the method comprises:

   performing, based on a target sparsity mode and a target sparsity ratio, initial structured sparsity on each of a plurality of to-be-sparsified network layers comprised in a deep learning network model, to obtain an initial sparse network model, wherein
   a quantity of elements in an input matrix of a target operator at each network layer in the initial sparse network model is less than a quantity of elements in an input matrix of a target operator at a corresponding network layer in the deep learning network model, and a dimension of an output matrix of the initial sparse network model is the same as a dimension of an output matrix of the deep learning network model;
   determining a precision of the initial sparse network model based on a test sample set; and
   when the precision of the initial sparse network model reaches a target precision, determining the initial sparse network model as a deep learning network model obtained through structured sparsity.

2. The method according to claim 1, wherein performing, based on the target sparsity mode and the target sparsity ratio, initial structured sparsity on each of the plurality of to-be-sparsified network layers comprised in the deep learning network model comprises:

   adding a target sparsity operator to a target network layer based on the target sparsity mode and the target sparsity ratio, wherein the target sparsity operator is used to prune elements in an input matrix of a target operator at the target network layer, and the target network layer is any one of the plurality of network layers; and
   adding a matrix processing operator to the target network layer, wherein the matrix processing operator is used to process a mapping matrix of the target network layer based on a pruning result of the target sparsity operator, to enable a dimension of an output matrix of the target network layer to remain the same before and after initial structured sparsity is performed on the target network layer.

3. The method according to claim 2, wherein the target sparsity mode is an overall sparsity mode, the target sparsity ratio is M%, and M is greater than 0 and less than 100; and
adding the target sparsity operator to the target network layer based on the target sparsity mode and the target sparsity ratio comprises:
adding a first sparsity operator to the target network layer based on the target sparsity mode and the target sparsity ratio, wherein the first sparsity operator is used to prune elements of a target dimension in the input matrix of the target operator at the target network layer, to retain the first 1-M% of elements with largest values in the target dimension.

4. The method according to claim 2, wherein the target sparsity mode is a partitioned sparsity mode, the target sparsity ratio is N:R, both N and R are integers greater than or equal to 1, and N is less than R; and
adding the target sparsity operator to the target network layer based on the target sparsity mode and the target sparsity ratio comprises:
adding a second sparsity operator to the target network layer based on the target sparsity mode and the target sparsity ratio, wherein the second sparsity operator is used to prune elements of a target dimension in the input matrix of the target operator at the target network layer, to retain the first N elements with largest values among every R elements of the target dimension.

5. The method according to any one of claims 1 to 3, wherein the method further comprises:
when the precision of the initial sparse network model does not reach the target precision, optimizing a sparsity ratio of each network layer in the initial sparse network model based on the target precision, the target sparsity ratio, and the test sample set, to obtain a deep learning network model that is obtained through structured sparsity.

6. The method according to claim 5, wherein optimizing the sparsity ratio of each network layer in the initial sparse network model based on the target precision, the target sparsity ratio, and the test sample set, to obtain the deep learning network model that is obtained through structured sparsity comprises:

determining sensitivity of each network layer in the initial sparse network model based on the target precision and the test sample set;
determining an optimized sparsity ratio of each network layer based on the sensitivity of each network layer, a quantity of the plurality of network layers, a total quantity of elements of the target dimension, and the target sparsity ratio;
optimizing the sparsity ratio of each network layer in the initial sparse network model based on the optimized sparsity ratio of each network layer, to obtain an optimized network model;
determining a precision of the optimized network model based on the test sample set; and
when the precision of the optimized network model reaches the target precision, determining the optimized network model as the deep learning network model obtained through structured sparsity.

7. The method according to claim 6, determining the sensitivity of each network layer in the initial sparse network model based on the target precision and the test sample set comprises:

determining a precision of each network layer in the initial sparse network model based on the test sample set; and
determining the sensitivity of each network layer based on the target precision and the precision of each network layer.

8. The method according to claim 6, wherein after determining the precision of the optimized network model based on the test sample set, the method further comprises:

when the precision of the optimized network model does not reach the target precision, adding an element scaling operator to each network layer in the optimized network model, wherein the element scaling operator is used to scale elements in an output matrix of a target operator at a network layer at which the element scaling operator is located; and
optimizing a scaling ratio of the element scaling operator at each network layer in the optimized network model based on an initial ratio range and a plurality of granularities, to obtain the deep learning network model that is obtained through structured sparsity.

9. The method according to any one of claims 1 to 4, wherein the method further comprises:

when the precision of the initial sparse network model does not reach the target precision, adding an element scaling operator to each network layer in the initial sparse network model, wherein the element scaling operator is used to scale elements in an output matrix of a target operator at a network layer at which the element scaling operator is located; and

optimizing a scaling ratio of the element scaling operator at each network layer in the initial sparse network model based on an initial ratio range and a plurality of granularities, to obtain a deep learning network model that is obtained through structured sparsity.

10. The method according to claim 9, wherein optimizing the scaling ratio of the element scaling operator at each network layer in the initial sparse network model based on the initial ratio range and the plurality of granularities, to obtain the deep learning network model that is obtained through structured sparsity comprises:

assuming that i=1, using the initial ratio range as an $i^{th}$ ratio range, selecting an $i^{th}$ granularity from the plurality of granularities in descending order, and searching, based on the $i^{th}$ granularity, the $i^{th}$ ratio range for a reference scaling ratio corresponding to each network layer, wherein the reference scaling ratio is a scaling ratio used when a corresponding network layer has a maximum precision; and

when i is equal to a total quantity of the plurality of granularities, determining, as the deep learning network model obtained through structured sparsity, a network model in which the scaling ratio of the element scaling operator at each network layer is the reference scaling ratio; or

when i is less than a total quantity of the plurality of granularities, assuming that i=i+1, determining, based on an $(i-1)^{th}$ granularity and an $i^{th}$ granularity among the plurality of granularities in descending order and the reference scaling ratio corresponding to each network layer, an $i^{th}$ ratio range corresponding to each network layer, and returning to the step of searching, based on the $i^{th}$ granularity, the $i^{th}$ ratio range for a reference scaling ratio corresponding to each network layer.

11. The method according to claim 10, wherein determining, based on the $(i-1)^{th}$ granularity and the $i^{th}$ granularity among the plurality of granularities in descending order and the reference scaling ratio corresponding to each network layer, the $i^{th}$ ratio range corresponding to each network layer comprises:

determining a difference between the $(i-1)^{th}$ granularity and the $i^{th}$ granularity; and

subtracting the difference from a reference scaling ratio corresponding to the target network layer, to obtain a lower limit of an $i^{th}$ ratio range corresponding to the target network layer, and adding the difference to the reference scaling ratio corresponding to the target network layer, to obtain an upper limit of the $i^{th}$ ratio range corresponding to the target network layer, wherein the target network layer is any one of the plurality of network layers.

12. The method according to any one of claims 1 to 11, wherein the plurality of network layers each comprise a module using a self-attention mechanism, and the target operator is a normalized exponential softmax operator.

13. The method according to any one of claims 1 to 12, wherein the deep learning network model is applicable to any one of the following types of task scenarios: semantic segmentation, image classification, object detection, image generation, language modeling, question answering, machine translation, and sentiment analysis.

14. The method according to claim 13, wherein when the deep learning network model is applicable to the image classification task scenario, the test sample set comprises a test image and a classification labeling result; or

when the deep learning network model is applicable to the question answering task scenario, the test sample set comprises a test question in a text format and an answer labeling result.

15. A structured sparsity method for a network model, applied to a server, wherein the method comprises:

receiving a target sparsity mode, a target sparsity ratio, a deep learning network model, a test sample set, and a target precision that are sent by a terminal;

performing, based on the target sparsity mode and the target sparsity ratio, initial structured sparsity on each of a plurality of to-be-sparsified network layers comprised in the deep learning network model, to obtain an initial sparse network model, wherein

a quantity of elements in an input matrix of a target operator at each network layer in the initial sparse network model is less than a quantity of elements in an input matrix of a target operator at a corresponding network layer in the deep learning network model, and a dimension of an output matrix of the initial sparse network model is the same as a dimension of an output matrix of the deep learning network model;

determining a precision of the initial sparse network model based on the test sample set; and

when the precision of the initial sparse network model reaches the target precision, determining the initial sparse network model as a deep learning network model obtained through structured sparsity, and sending the deep learning network model obtained through structured sparsity to the terminal.

16. An image classification method, wherein the method comprises:

inputting a to-be-classified target image to an image classification model, wherein the image classification model comprises a plurality of sparse network layers;

determining a feature matrix based on a mapping matrix of a target network layer, wherein the target network layer is any one of the plurality of network layers, and the mapping matrix is determined based on the target image;

pruning elements in the feature matrix to obtain a pruned feature matrix and a position matrix, wherein the position matrix indicates a position, in the feature matrix that exists before the pruning, of each element in the pruned feature matrix;

inputting the pruned feature matrix to a target operator at the target network layer, to obtain a normalized matrix;

determining an output matrix of the target network layer based on the position matrix and the normalized matrix; and

determining, based on the output matrix of the target network layer, a classification result output by the image classification model.

17. The method according to claim 16, wherein the target network layer comprises a target sparsity operator, and the target sparsity operator has a target sparsity mode and a target sparsity ratio; and
pruning the elements in the feature matrix to obtain the pruned feature matrix and the position matrix comprises:
pruning the elements in the feature matrix based on the target sparsity mode and the target sparsity ratio by using the target sparsity operator, to obtain the pruned feature matrix and the position matrix.

18. The method according to claim 17, wherein the target sparsity mode is an overall sparsity mode, the target sparsity ratio is M%, M is greater than 0 and less than 100, and the target sparsity operator is a first sparsity operator; and
pruning the elements in the feature matrix based on the target sparsity mode and the target sparsity ratio by using the target sparsity operator, to obtain the pruned feature matrix and the position matrix comprises:
retaining, by using the first sparsity operator, the first 1-M% of elements with largest values among elements of a target dimension in the feature matrix, and determining a position of each retained element, to obtain the pruned feature matrix and the position matrix.

19. The method according to claim 17, wherein the target sparsity mode is a partitioned sparsity mode, the target sparsity ratio is N:R, both N and R are integers greater than or equal to 1, N is less than R, and the target sparsity operator is a second sparsity operator; and
pruning the elements in the feature matrix based on the target sparsity mode and the target sparsity ratio by using the target sparsity operator, to obtain the pruned feature matrix and the position matrix comprises:
retaining, by using the second sparsity operator, the first N elements with largest values among every R elements of a target dimension in the feature matrix, and determining a position of each retained R element, to obtain the pruned feature matrix and the position matrix.

20. The method according to any one of claims 16 to 19, wherein the target network layer further comprises an element scaling operator, and after inputting the pruned feature matrix to the target operator at the target network layer, to obtain the normalized matrix, the method further comprises:

scaling elements in the normalized matrix by using the element scaling operator; and
determining the output matrix of the target network layer based on the position matrix and the normalized matrix comprises:
determining the output matrix of the target network layer based on the position matrix and a scaled normalized matrix.

21. A structured sparsity apparatus for a network model, wherein the apparatus comprises:

a structured sparsity module, configured to perform, based on a target sparsity mode and a target sparsity ratio, initial structured sparsity on each of a plurality of to-be-sparsified network layers comprised in a deep learning network model, to obtain an initial sparse network model, wherein
a quantity of elements in an input matrix of a target operator at each network layer in the initial sparse network model is less than a quantity of elements in an input matrix of a target operator at a corresponding network layer in the deep learning network model, and a dimension of an output matrix of the initial sparse network model is the same as a dimension of an output matrix of the deep learning network model;

a precision testing module, configured to determine a precision of the initial sparse network model based on a test sample set; and

a determining module, configured to: when the precision of the initial sparse network model reaches a target precision, determine the initial sparse network model as a deep learning network model obtained through structured sparsity.

22. The apparatus according to claim 21, wherein the structured sparsity module comprises:

a first adding unit, configured to add a target sparsity operator to a target network layer based on the target sparsity mode and the target sparsity ratio, wherein the target sparsity operator is used to prune elements in an input matrix of a target operator at the target network layer, and the target network layer is any one of the plurality of network layers; and

a second adding unit, configured to add a matrix processing operator to the target network layer, wherein the matrix processing operator is used to process a mapping matrix of the target network layer based on a pruning result of the target sparsity operator, to enable a dimension of an output matrix of the target network layer to remain the same before and after initial structured sparsity is performed on the target network layer.

23. The apparatus according to claim 22, wherein the target sparsity mode is an overall sparsity mode, the target sparsity ratio is M%, and M is greater than 0 and less than 100; and

the first adding unit is specifically configured to:

add a first sparsity operator to the target network layer based on the target sparsity mode and the target sparsity ratio, wherein the first sparsity operator is used to prune elements of a target dimension in the input matrix of the target operator at the target network layer, to retain the first 1-M% of elements with largest values in the target dimension.

24. The apparatus according to claim 22, wherein the target sparsity mode is a partitioned sparsity mode, the target sparsity ratio is N:R, both N and R are integers greater than or equal to 1, and N is less than R; and

the first adding unit is specifically configured to:

add a second sparsity operator to the target network layer based on the target sparsity mode and the target sparsity ratio, wherein the second sparsity operator is used to prune elements of a target dimension in the input matrix of the target operator at the target network layer, to retain the first N elements with largest values among every R elements of the target dimension.

25. The apparatus according to any one of claims 21 to 23, wherein the apparatus further comprises:

a first sparsity parameter optimization module, configured to: when the precision of the initial sparse network model does not reach the target precision, optimize a sparsity ratio of each network layer in the initial sparse network model based on the target precision, the target sparsity ratio, and the test sample set, to obtain a deep learning network model that is obtained through structured sparsity.

26. The apparatus according to claim 25, wherein the first sparsity parameter optimization module comprises:

a first determining unit, configured to determine sensitivity of each network layer in the initial sparse network model based on the target precision and the test sample set;

a second determining unit, configured to determine an optimized sparsity ratio of each network layer based on the sensitivity of each network layer, a quantity of the plurality of network layers, a total quantity of elements of the target dimension, and the target sparsity ratio;

a first optimization unit, configured to optimize the sparsity ratio of each network layer in the initial sparse network model based on the optimized sparsity ratio of each network layer, to obtain an optimized network model;

a third determining unit, configured to determine a precision of the optimized network model based on the test sample set; and

a fourth determining unit, configured to: when the precision of the optimized network model reaches the target precision, determine the optimized network model as the deep learning network model obtained through structured sparsity.

27. The apparatus according to claim 26, wherein the first determining unit is specifically configured to:

determine a precision of each network layer in the initial sparse network model based on the test sample set; and determine the sensitivity of each network layer based on the target precision and the precision of each network layer.

28. The apparatus according to claim 26, wherein the first sparsity parameter optimization module further comprises:

an adding unit, configured to: when the precision of the optimized network model does not reach the target precision, add an element scaling operator to each network layer in the optimized network model, wherein the element scaling operator is used to scale elements in an output matrix of a target operator at a network layer at which the element scaling operator is located; and
a second optimization unit, configured to optimize a scaling ratio of the element scaling operator at each network layer in the optimized network model based on an initial ratio range and a plurality of granularities, to obtain the deep learning network model that is obtained through structured sparsity.

29. The apparatus according to any one of claims 21 to 24, wherein the apparatus further comprises:

an adding module, configured to: when the precision of the initial sparse network model does not reach the target precision, add an element scaling operator to each network layer in the initial sparse network model, wherein the element scaling operator is used to scale elements in an output matrix of a target operator at a network layer at which the element scaling operator is located; and
a second sparsity parameter optimization module, configured to optimize a scaling ratio of the element scaling operator at each network layer in the initial sparse network model based on an initial ratio range and a plurality of granularities, to obtain a deep learning network model that is obtained through structured sparsity.

30. The apparatus according to claim 29, wherein the second sparsity parameter optimization module comprises:

a search unit, configured to: assume that i=1, use the initial ratio range as an $i^{th}$ ratio range, select an $i^{th}$ granularity from the plurality of granularities in descending order, and search, based on the $i^{th}$ granularity, the $i^{th}$ ratio range for a reference scaling ratio corresponding to each network layer, wherein the reference scaling ratio is a scaling ratio used when a corresponding network layer has a maximum precision;
a first determining unit, configured to: when i is equal to a total quantity of the plurality of granularities, determine, as the deep learning network model obtained through structured sparsity, a network model in which the scaling ratio of the element scaling operator at each network layer is the reference scaling ratio; and
a second determining unit, configured to: when i is less than a total quantity of the plurality of granularities, assume that i=i+1, determine, based on an $(i-1)^{th}$ granularity and an $i^{th}$ granularity among the plurality of granularities in descending order and the reference scaling ratio corresponding to each network layer, an $i^{th}$ ratio range corresponding to each network layer, and return to the step of searching, based on the $i^{th}$ granularity, the $i^{th}$ ratio range for a reference scaling ratio corresponding to each network layer.

31. The apparatus according to claim 30, wherein the second determining unit is specifically configured to:

determine a difference between the $(i-1)^{th}$ granularity and the $i^{th}$ granularity; and
subtract the difference from a reference scaling ratio corresponding to the target network layer, to obtain a lower limit of an $i^{th}$ ratio range corresponding to the target network layer, and add the difference to the reference scaling ratio corresponding to the target network layer, to obtain an upper limit of the $i^{th}$ ratio range corresponding to the target network layer, wherein the target network layer is any one of the plurality of network layers.

32. The apparatus according to any one of claims 21 to 31, wherein the plurality of network layers each comprise a module using a self-attention mechanism, and the target operator is a normalized exponential softmax operator.

33. The apparatus according to any one of claims 21 to 32, wherein the deep learning network model is applicable to any one of the following types of task scenarios: semantic segmentation, image classification, object detection, image generation, language modeling, question answering, machine translation, and sentiment analysis.

34. The apparatus according to claim 33, wherein when the deep learning network model is applicable to the image classification task scenario, the test sample set comprises a test image and a classification labeling result; or
when the deep learning network model is applicable to the question answering task scenario, the test sample set comprises a test question in a text format and an answer labeling result.

35. A structured sparsity apparatus for a network model, wherein the apparatus comprises:

> a receiving module, configured to receive a target sparsity mode, a target sparsity ratio, a deep learning network model, a test sample set, and a target precision that are sent by a terminal;
> a structured sparsity module, configured to perform, based on the target sparsity mode and the target sparsity ratio, initial structured sparsity on each of a plurality of to-be-sparsified network layers comprised in the deep learning network model, to obtain an initial sparse network model, wherein
> a quantity of elements in an input matrix of a target operator at each network layer in the initial sparse network model is less than a quantity of elements in an input matrix of a target operator at a corresponding network layer in the deep learning network model, and a dimension of an output matrix of the initial sparse network model is the same as a dimension of an output matrix of the deep learning network model;
> a precision testing module, configured to determine a precision of the initial sparse network model based on the test sample set;
> a determining module, configured to: when the precision of the initial sparse network model reaches the target precision, determine the initial sparse network model as a deep learning network model obtained through structured sparsity; and
> a sending module, configured to send the deep learning network model obtained through structured sparsity to the terminal.

36. An image classification apparatus, wherein the apparatus comprises:

> a first input module, configured to input a to-be-classified target image to an image classification model, wherein the image classification model comprises a plurality of sparse network layers;
> a first determining module, configured to determine a feature matrix based on a mapping matrix of a target network layer, wherein the target network layer is any one of the plurality of network layers, and the mapping matrix is determined based on the target image;
> a pruning module, configured to prune elements in the feature matrix to obtain a pruned feature matrix and a position matrix, wherein the position matrix indicates a position, in the feature matrix that exists before the pruning, of each element in the pruned feature matrix;
> a second input module, configured to input the pruned feature matrix to a target operator at the target network layer, to obtain a normalized matrix;
> a second determining module, configured to determine an output matrix of the target network layer based on the position matrix and the normalized matrix; and
> a third determining module, configured to determine, based on the output matrix of the target network layer, a classification result output by the image classification model.

37. The apparatus according to claim 36, wherein the target network layer comprises a target sparsity operator, and the target sparsity operator has a target sparsity mode and a target sparsity ratio; and
the pruning module is specifically configured to:
prune the elements in the feature matrix based on the target sparsity mode and the target sparsity ratio by using the target sparsity operator, to obtain the pruned feature matrix and the position matrix.

38. The apparatus according to claim 37, wherein the target sparsity mode is an overall sparsity mode, the target sparsity ratio is M%, M is greater than 0 and less than 100, and the target sparsity operator is a first sparsity operator; and
the pruning module is specifically configured to:
retain, by using the first sparsity operator, the first 1-M% of elements with largest values among elements of a target dimension in the feature matrix, and determine a position of each retained element, to obtain the pruned feature matrix and the position matrix.

39. The apparatus according to claim 37, wherein the target sparsity mode is a partitioned sparsity mode, the target sparsity ratio is N:R, both N and R are integers greater than or equal to 1, N is less than R, and the target sparsity operator is a second sparsity operator; and
the pruning module is specifically configured to:
retain, by using the second sparsity operator, the first N elements with largest values among every R elements of a target dimension in the feature matrix, and determine a position of each retained R element, to obtain the pruned feature matrix and the position matrix.

40. The apparatus according to any one of claims 36 to 39, wherein the apparatus further comprises:

a scaling module, configured to scale elements in the normalized matrix by using the element scaling operator; and

the second determining module is specifically configured to:

determine the output matrix of the target network layer based on the position matrix and a scaled normalized matrix.

41. A computer-readable storage medium, wherein the storage medium stores instructions, and when the instructions are run on the computer, the computer is enabled to perform the steps of the method according to any one of claims 1 to 20.

42. A computer program product comprising instructions, wherein when the instructions are run on a computer, the computer is enabled to perform the steps of the method according to any one of claims 1 to 20.

FIG. 1

FIG. 2

FIG. 3

FIG. 4

Perform, based on a target sparsity mode and a target sparsity ratio, initial structured sparsity on each of a plurality of to-be-sparsified network layers included in a deep learning network model, to obtain an initial sparse network model — 501

Determine a precision of the initial sparse network model based on a test sample set — 502

When the precision of the initial sparse network model reaches a target precision, determine the initial sparse network model as a deep learning network model obtained through structured sparsity — 503

FIG. 5

Terminal

Server

601: Send a target sparsity mode, a target sparsity ratio, a deep learning network model, a test sample set, and a target precision

602: Perform, based on the target sparsity mode and the target sparsity ratio, initial structured sparsity on each of a plurality of to-be-sparsified network layers included in the deep learning network model, to obtain an initial sparse network model

603: Determine a precision of the initial sparse network model based on the test sample set

604: When the precision of the initial sparse network model reaches the target precision, the server determines the initial sparse network model as a deep learning network model obtained through structured sparsity, and sends the deep learning network model obtained through structured sparsity to the terminal

FIG. 6

```
┌─────────────────────────────────────────────────────────────┐
│ Input a to-be-classified target image to an image            │        701
│ classification model, where the image classification model   │
│ includes a plurality of sparse network layers                │
└─────────────────────────────────────────────────────────────┘
                              │
                              ▼
┌─────────────────────────────────────────────────────────────┐
│ Determine a feature matrix based on a mapping matrix of a     │        702
│ target network layer, where the target network layer is any   │
│ one of the plurality of network layers                        │
└─────────────────────────────────────────────────────────────┘
                              │
                              ▼
┌─────────────────────────────────────────────────────────────┐
│ Prune elements in the feature matrix to obtain a pruned       │        703
│ feature matrix and a position matrix, where the position      │
│ matrix indicates a position, in the feature matrix, of each   │
│ element in the pruned feature matrix                          │
└─────────────────────────────────────────────────────────────┘
                              │
                              ▼
┌─────────────────────────────────────────────────────────────┐
│ Input the pruned feature matrix to a target operator at the   │        704
│ target network layer, to obtain a normalized matrix           │
└─────────────────────────────────────────────────────────────┘
                              │
                              ▼
┌─────────────────────────────────────────────────────────────┐
│ Determine an output matrix of the target network layer based  │        705
│ on the position matrix and the normalized matrix              │
└─────────────────────────────────────────────────────────────┘
                              │
                              ▼
┌─────────────────────────────────────────────────────────────┐
│ Determine, based on the output matrix of the target network   │        706
│ layer, a classification result output by the image            │
│ classification model                                          │
└─────────────────────────────────────────────────────────────┘
```

FIG. 7

Query matrix

×

Transpose of
a key matrix

Feature
matrix

Pruned feature
matrix

| 1 | 2 |
|---|---|
| 0 | 3 |
| 0 | 2 |
| 1 | 3 |

Position
matrix

FIG. 8

FIG. 9

Input a to-be-answered target question to a question answering model, where the question answering model includes a plurality of sparse network layers ⟶ 1001

Determine a feature matrix based on a mapping matrix of a target network layer, where the target network layer is any one of the plurality of network layers ⟶ 1002

Prune elements in the feature matrix to obtain a pruned feature matrix and a position matrix, where the position matrix indicates a position, in the feature matrix, of each element in the pruned feature matrix ⟶ 1003

Input the pruned feature matrix to a target operator at the target network layer, to obtain a normalized matrix ⟶ 1004

Determine an output matrix of the target network layer based on the position matrix and the normalized matrix ⟶ 1005

Determine, based on the output matrix of the target network layer, an answer output by the question answering model ⟶ 1006

FIG. 10

Structured sparsity apparatus for a network model

Structured sparsity module ⟶ 1101

Precision testing module ⟶ 1102

Determining module ⟶ 1103

FIG. 11

Structured sparsity apparatus for a network model

Receiving module — 1201

Structured sparsity module — 1202

Precision testing module — 1203

Determining module — 1204

Sending module — 1205

FIG. 12

Image classification apparatus

First input module — 1301

First determining module — 1302

Pruning module — 1303

Second input module — 1304

Second determining module — 1305

Third determining module — 1306

FIG. 13

FIG. 14

## INTERNATIONAL SEARCH REPORT

| International application No. |
| --- |
| **PCT/CN2024/083269** |

### A. CLASSIFICATION OF SUBJECT MATTER

G06N 3/082(2023.01)i; G06N 3/047(2023.01)i; G06N 5/04(2023.01)i; G06V 10/764(2022.01)i; G06V 10/82(2022.01)i

According to International Patent Classification (IPC) or to both national classification and IPC

### B. FIELDS SEARCHED

Minimum documentation searched (classification system followed by classification symbols)

IPC: G06N G06V

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE: 华为, 神经网络, 深度学习, 稀疏, 结构化, 剪枝, 矩阵, 算子, 稀疏度, 稀疏比率, 稀疏率, 粒度, 倍率, neural network, deep learning, sparsity, structuring, pruning, matrix, sparsity rate, granularity, multiplier

### C. DOCUMENTS CONSIDERED TO BE RELEVANT

| Category* | Citation of document, with indication, where appropriate, of the relevant passages | Relevant to claim No. |
| --- | --- | --- |
| X | LI, Yuchao et al. "Exploiting Kernel Sparsity and Entropy for Interpretable CNN Compression" *arXiv*, 01 April 2019 (2019-04-01), pages 1-10 | 1-9, 12-29, 32-42 |
| A | LI, Yuchao et al. "Exploiting Kernel Sparsity and Entropy for Interpretable CNN Compression" *arXiv*, 01 April 2019 (2019-04-01), pages 1-10 | 10, 11, 30, 31 |
| A | CN 110929798 A (CHONGQING UNIVERSITY OF POSTS AND TELECOMMUNICATIONS) 27 March 2020 (2020-03-27) entire document | 1-42 |
| A | CN 114118425 A (NATIONAL UNIVERSITY OF DEFENSE TECHNOLOGY OF PLA) 01 March 2022 (2022-03-01) entire document | 1-42 |

☐ Further documents are listed in the continuation of Box C.   ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **15 April 2024** | **23 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/083269**

| Patent document cited in search report | | | Publication date (day/month/year) | Patent family member(s) | Publication date (day/month/year) |
|---|---|---|---|---|---|
| CN | 110929798 | A | 27 March 2020 | None | |
| CN | 114118425 | A | 01 March 2022 | None | |

Form PCT/ISA/210 (patent family annex) (July 2022)

**EP 4 685 703 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310350886